# EUROPEAN PATENT SPECIFICATION

(11) **EP 0 391 282 B1**
(45) Date of publication and mention of the grant of the patent: **03.11.1993**
(21) Application number: 90106186.1
(22) Date of filing: 30.03.1990
(51) Int. Cl.: B62M 27/02, B62D 55/24

(54) **Snow vehicle**
Schneefahrzeug
Véhicule pour la neige

(30) Priority: 01.04.1989 JP 83100/89; 03.07.1989 JP 172726/89
(43) Date of publication of application: 10.10.1990
(73) Proprietor: HONDA GIKEN KOGYO KABUSHIKI KAISHA, Minato-ku Tokyo (JP)
(72) Inventor: Yoshioka, Toshiharu, Wako-shi, Saitama (JP); Ohzeki, Takashi, Wako-shi, Saitama (JP); Suzuki, Hideaki, Wako-shi, Saitama (JP); Tottori, Takumi, Wako-shi, Saitama (JP)
(74) Representative: Fincke, Karl Theodor, Dipl.-Phys. Dr.

(56) References cited:
- WO-A-87/01085
- FR-A- 2 093 248
- US-A- 1 542 625
- US-A- 3 252 533
- US-A- 3 485 312
- US-A- 3 508 796
- US-A- 3 619 012
- US-A- 4 613 006
- US-A- 4 714 125
- US-E- 28 423

## Description

The present invention relates to a saddle-riding type snow vehicle comprising a vehicle body, a rear fork pivotally supported by said vehicle body at the rear end thereof, a driving wheel rotatably supported by an axle mounted to said rear fork, a pair of oppositely disposed rear arms connected by their front ends to the rear ends of said rear fork and rotatably mounting a guide wheel at the rear ends thereof, an endless belt extending between and enclosing said driving wheel and said guide wheel, a head pipe at the front end of said vehicle body, a front fork pivotally mounted in said head pipe and a steering ski supported by the lower end of said front fork.

Such a snow vehicle has been known from US-A-4 613 006. The snow vehicle according to this US-A 4 613 006 has two coaxial driving wheels engaging the outer edge portions of the endless belt. The distance of these two driving wheels from one another is larger that the width of the steering ski.

From US-A-3 619 012 an endless belt for a snow vehicle driving device has been known comprising a belt body convexly curved in lateral direction, a plurality of mutually spaced propelling lugs formed on the exterior surface of said belt body and extending transversely thereof, and a plurality of core members embedded in a central region of said belt body in substantial alignment with said propelling lugs.
The total width of the snow vehicle known from US-PS 4 613 006 is large causing interference with standing trees or the like during travelling and interference with the snow surface upon turning of the vehicle.
Accordingly, it is the object of the present invention to avoid such interferences, thereby improving the ability of the vehicle to move upon passing through narrow areas and reducing its running resistance due to the snow.

Furthermore, it is also necessary to smoothly steer the steering ski, so as to improve the running performance.

To solve this problem the snow vehicle is characterized in that the driving wheel has a rim, that the endless belt has a lateral width greater than the lateral width of said rim of said driving wheel, and that the steering ski and said driving wheel are substantially equal in width.

The present invention contributes too to the solution of the problem that, in turning a snow vehicle it is hard to incline the vehicle body of the snow vehicle since the contact surface of the endless belt contacting the snow surface is flat, and the width of the endless belt is normally large so as to reduce the contact pressure against the snow surface. If the vehicle body of the snow vehicle is inclined upon turning, an outer-diameter side portion of the contact surface is separated from the snow surface, and only an inner-diameter side portion of the contact surface contacts the snow surface. As a result, the contact pressure is increased, and the driving or propelling force is reduced. Further, as the endless belt having a large width is inclined, the center of gravity of the vehicle body is vertically varied, thereby reducing the riding comfort of the driver.

Also the present invention contributes to the solution of the problem of providing a cover for the endless track belt so as to prevent snow, or the like, from being caught up by the endless track belt during its operation and being scattered against the rider and vehicle components. Particularly provided is an endless track belt cover apparatus that is suitable for use in a device in which there is articulation between elements of the apparatus that are covered. In the above endless track device, as the swing arms and the rear arms are arranged to swing with respect to each other, if the track belt cover is mounted to the swing arms in a conventional manner, it is necessary to define a large space between the track belt and the track belt cover. Consequently, the scattering of snow, or the like, caught up by the track belt cannot be adequately prevented.

The present invention contributes too to the solution of the problem to provide a snow vehicle having improved running performance.

Also the present invention contributes to the solution of the problem to provide a saddle-riding type compact snow vehicle, wherein the endless track can readily follow the inclination of the vehicle body, and a contact area of the endless track contacting the snow surface can be increased to prevent an increase in contact pressure and a decrease in driving force upon turning of the vehicle.

The present invention contributes too to the solution of the problem to provide a track belt cover which can effectively prevent the scattering of the snow, or the like.

The snow vehicle may include a pair of right and left steps projecting laterally outwardly from the vehicle body frame, wherein a maximum width of the rear fork is set to be substantially equal to a lateral distance between the steps.

The rear arms, a sub-cushion extending between the rear fork and the rear arms, and a brake device for the driving wheel may be accommodated inside the endless belt.

The maximum width of the endless belt may be set to be substantially equal to an inner dimension between right and left arm portions of the rear fork. Also, the snow vehicle may include a driven member provided laterally outside of the driving wheel for transmitting the driving force to the driving wheel, wherein the right or left front end portion of the rear arms is disposed laterally between the driving wheel and the driven member.

The vertical position of the rear axle of the driving wheel may be set to be higher than the minimum road clearance of the vehicle body of the snow vehicle under the condition that an operator rides the snow vehicle.

The axle weight to be applied to the rear axle may be set to be substantially equal to an axle weight to be applied to the shaft for supporting the guide wheel.

The snow vehicle may include a ski bracket for mounting the steering ski to the front fork and a ski axle for supporting the ski bracket to the steering ski, the ski axle being positioned so as to intersect a steering axis.

The snow vehicle may include an elastic member interposed between the ski bracket and the steering ski.

The ski bracket may be mounted at its upper portion to the brake caliper mounting portion and the front axle mounting portion both formed on the front fork for adaptation to a motorcycle.

The snow vehicle may include a front sub-cushion having one end mounted to the steering ski and the other end mounted to the front fork, wherein the mounting portion for mounting the one end of the front sub-cushion to the steering ski is positioned behind the steering axis.

The snow vehicle may include right and left edge members mounted to opposite sides of the steering ski, wherein the mounting position of each of the edge members is adjustable.

If the rear arms of the endless track device are disposed laterally inside of the rear fork, the width of the endless track device can be made smaller than that of the rear fork. As a result, the snow vehicle can easily pass through narrow areas, thus improving its passing ability.

If the maximum width of the rear fork is set to be nearly equal to the lateral distance between the right and left steps, the vehicle body can be made slim, thereby reducing its running resistance.

If the rear arms, the brake caliper, the rear subcushion, etc., are accommodated inside of the endless belt, the running resistance due to the snow can be further reduced.

If the width of the endless belt is set to be nearly equal to the inner dimension between the right and left arm portions of the rear fork, the endless belt can be made wide, thereby reducing its contact pressure against the snow surface and improving anti-stack performance.

If the front end portion of the rear arm is disposed laterally between the driving wheel and the driven member, the width of the endless belt can be made larger as compared with the case that the driven member is disposed laterally inside of the rear arm.

If the vertical position of the rear axle is set to be higher than the minimum road clearance of the vehicle body when the operator rides the snow vehicle, the endless track device is prevented from digging to a great degree into the deep snow, thereby improving the anti-stack performance.

If the weight to be applied to the rear axle is set to be substantially equal to the axle weight to be applied to the supporting shaft of the guide wheel, the contact area of the endless belt contacting the snow surface can be increased to thereby reduce the contact pressure.Accordingly, the digging of the endless track device into the snow can be reduced to improve the anti-stack performance.

If the ski axle is positioned so as to intersect the steering axis, the positioned load can be reduced.

If an elastic member the interposed between the ski bracket and the steering ski, any impact upon the steering mechanism can be damped by the elastic member.

If a ski bracket is mounted to the front fork by utilizing the mounting portions for mounting a brake caliper and a front axle in the case of a motorcycle, the mounting operation of the ski bracket can be easily carried out.

If the mounting portion for mounting one end of the front sub-cushion to the steering ski is positioned behind the steering axis, a trail effect can be effected, thus to improve straight running ability.

If the mounting position of the edge members is adjustable, the effectiveness of edging of the steering ski can be suitably controlled.

The endless track-type driving device of the has preferably an endless belt formed on its outer circumferential surface with a plurality of propelling lugs extending transversely of the endless belt and arranged at given intervals in a circumferential direction thereof. The endless belt includes a core member embedded therein at a transversely central position of the belt and having a transverse length shorter than the belt width. A plurality of wall members are formed on an inner surface of the endless belt at positions corresponding to the propelling lugs. Each of the wall members extend transversely from a position corresponding to a substantially transverse end of the core member toward the side edge of the belt. A notch is formed in each of the thick-walled portions at a position transversely outside of the substantially transverse end of the core member.

With this arrangement, the transversely central portion of each propelling lug is reinforced by the core member, and the transversely opposite portions of each propelling lug are given a sufficient stiffness by the thick-walled portions. Accordingly, a sufficient propelling force can be provided by the propelling lugs being forced into the snow. Particularly in the case of turning the vehicle, the endless belt can be readily deformed owing to the formation of the notch in each wall member, thereby easily following the inclination of the vehicle body. Accordingly, an inclined portion of the endless belt can be brought into substantially flat and wide contact with the snow surface. That is, a large contact area can be ensured even upon turning of the vehicle, and a sufficient propelling force can also be ensured by the propelling lugs. The wall member formed on the inner surface of the endless belt also serve as cogs for engaging a driving sprocket or the like.

For covering the track belt to prevent scattering of the snow a track belt cover can be disposed over the endless track device being mounted to the rear arms thereof. Alternatively, the track belt cover can comprise a front cover component mounted to the rear fork and a rear cover component mounted to the rear arms, the front cover component being relatively movable with respect to the rear cover component and being overlapped at its rear end portion by the front end portion of the rear cover component.

With the track belt cover being mounted to the rear arms, even when the rear arms are swung relative to the rear fork during running of the vehicle, the track belt cover is swung together with the rear arms. Therefore, the track belt cover can be located just over the track belt with a small gap defined therebetween. On the other hand, when the cover comprises front and rear components, the front cover component is swung together with the rear fork, and the rear cover component is swung together with the rear arms. That is, the front cover component is swingable relative to the rear cover component, and the front and upper portions of the track belt can be covered by the front cover component more extensively.

Desirably outlet openings for the discharge of snow can be formed through opposite side surfaces of the front cover component and a grab rail can be provided on the rear arms to assist in manipulating the rear end of the vehicle. By forming the outlet openings through the opposite side surfaces of the front cover component, snow, or the like, caught up by the track belt and led forwardly along the inside surface thereof can be discharged from the outlet openings, thereby preventing the snow, or the like, from staying inside the front cover component and preventing an increase in running resistance. Further, by mounting the grab rail on the rear arms, the endless track device can be easily lifted by gripping the grab rail when it is desired, for example, to change the travelling direction without being hindered by the track belt cover.

In order to improve an anti-stack performance which is a very important performance of a snow vehicle, a laterally projecting amount of the supporting member for supporting the guide wheels or the like projecting from the lateral opposite sides of the endless belt should be reduced as greatly as possible to thereby make the driving device slim. Further, as the rear fork is independent of the rear arms, the number of parts and the number of assembling steps are increased in assembling the vehicle. To reduce the number of parts and the number of assembling steps for the purpose of reducing cost said rear fork is integrally formed with an arm portion for supporting said drive wheel and said guide wheel, and a rear portion of said arm portion for supporting said guide wheel is bent inwardly to be accommodated in an inside space of said endless belt.

As the rear end portions of the rear fork are bent inwardly to extend into the inside space defined by the endless belt, and the guide wheels are supported to the rear end portions, the rear arms for supporting the guide wheels as formed independently of the rear fork can be eliminated. Thus, the rear fork is integrally formed with the rear arms to eliminate the latter, and it is unnecessary to connect the rear arms on the lateral outside surfaces of the rear fork. Therefore, a laterally projecting amount of the supporting portion for supporting the guide wheels projecting from the lateral opposite sides of the endless belt can be reduced, thereby making the driving device slim in the lateral direction. Furthermore, since no rear arms are connected to the rear fork, the number of parts and the number of assembling steps can be reduced in assembling the vehicle.

For a better understanding of the invention, its operating advantages and the specific objectives obtained by its use, reference should be made to the accompanying drawings and description which relate to preferred embodiments thereof.
Figure 1 is essentially a side view of a snow vehicle constructed according to the present invention;
Figure 2 is a plan view, partly broken away, of the snow vehicle shown in Figure 1;
Figure 3 is a partial front elevational view, partly broken away, of the snow vehicle shown in Figure 1;
Figure 4 is a rear elevational view of the snow vehicle shown in Figure 1;
Figure 5 is an enlarged side view of the steering ski and the mounting structure thereof;
Figure 6 is an exploded perspective view of the steering ski of Figure 5;
Figure 6a is a sectional view showing an alternative form of the ski edge member;
Figure 7 is an enlarged partial plan view of the rear fork with the front part of the endless track device being shown in section;
Figure 8 is a rear elevational view of the endless track device, partly in section;
Figure 9 is an exploded perspective view of the endless track device;
Figures 10 and 11 are enlarged perspective views of a part of an endless belt useful in the endless track device, showing inside and outside surfaces thereof, respectively;
Figure 12 is a view similar to Figure 10, showing another embodiment of an endless belt;
Figure 13 is a view similar to Figure 10 showing yet another embodiment of an endless belt;
Figure 14 is a view similar to Figure 8 illustrating the endless track device provided with a belt guiding apparatus;
Figure 15 is a view similar to Figure 14, showing a leftward inclined condition of the endless track type driving device;
Figure 16 is an essentially schematic view illustrating the belt guiding apparatus;
Figure 17 is a partial sectional elevational view of a part of the endless belt provided with a clip;
Figure 18 is a transverse sectional view, shown in half, of another embodiment of the endless belt;
Figure 19 is a side view similar to Figure 1 showing an endless track device cover;
Figure 20 is an enlarged plan view of the essential part in Figure 19;
Figure 21 is a cross section taken along line A-A in Figure 19;
Figure 22 is a view similar to Figure 19 showing another form of the endless track device cover;
Figure 23 is an enlarged plan view similar to Figure 20 of the essential part in Figure 22;
Figure 24 is an exploded perspective view of the track belt cover shown in Figure 22;
Figure 25 is a cross section taken along line B-B in Figure 22;
Figure 26 is a view similar to Figures 19 and 22 showing a modified form of endless track cover;
Figure 27 is a perspective view of the front cover shown in Figure 26;
Figure 28 is a cross section taken along line C-C in Figure 26;
Figure 29 is a view similar to Figure 19 showing a covered endless track device having grip rails;
Figure 30 is an enlarged plan view of the essential part of Figure 29;
Figure 31 is a side view of the essential part of another form of grip rail;
Figure 32 is a partial plan view of the rear portion of the endless track device shown in Figure 31;
Figure 33 is a cross section along the line F-F in Figure 32;
Figure 34 is a side view of the essential part of yet another form of a grip rail;
Figure 35 is a partial plan view of the rear portion of the endless track device shown in Figure 34;
Figure 36 is a cross section along line G-G in Figure 34;
Figure 37 is an overall side view of the snow vehicle in another preferred embodiment of the present invention;
Figure 38 is a plan view of Fig. 37;
Figure 39 is a partially sectional side view of the driving device;
Figure 40 is a horizontal sectional view of the driving device;
Figure 41 is a partly cut-away enlarged side view of the steering ski device;
Figure 42 is a cross section taken along the line A-A in Figure 41;
Figure 43 is an enlarged plan view of the rear portion of the steering ski device;
Figure 44 is a side view of another preferred embodiment of the vehicle body of the snow vehicle according to the present invention;
Figure 45 is an enlarged cross section taken along the line A-A in Figure 44; and
Figure 46 is an enlarged cross section taken along the line B-B in Figure 44.

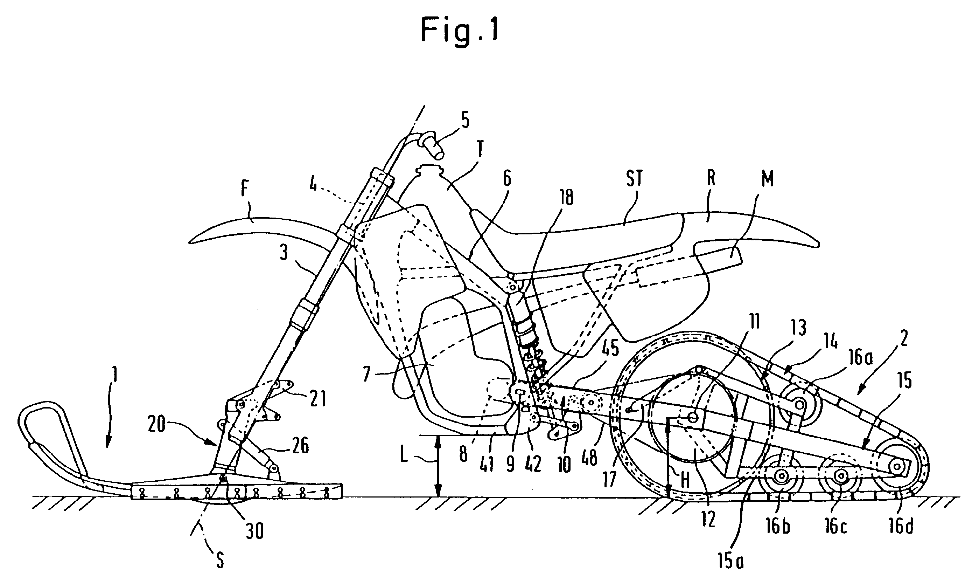

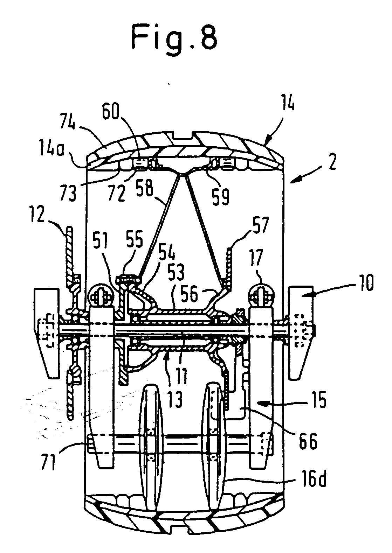

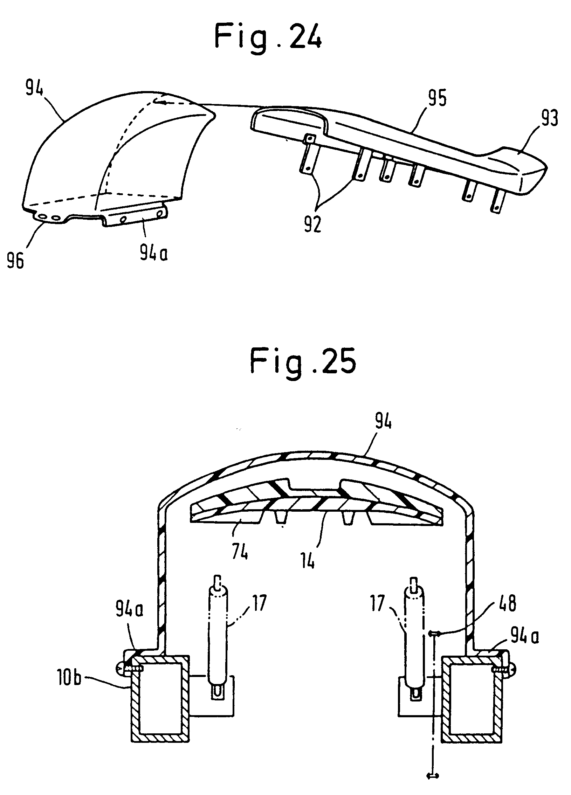

The snow vehicle apparatus shown in the drawing Figures 1 to 46 is constructed by utilizing a vehicle body of a motorcycle and substituting a steering ski 1 for the front wheel thereof and an endless track device 2 for the rear wheel. Therefore, many common parts constituting the vehicle body of the motorcycle are used in the snow vehicle. The vehicle body of the snow vehicle includes a front fork 3, a head pipe 4, a handle 5, a vehicle body frame 6, an engine 7, a drive sprocket 8, a pair of right and left foot-rests 9, a rear fork 10, a rear axle 11, and a driven sprocket 12.

The endless track device 2 includes a driving wheel 13, an endless belt 14, a pair of right and left rear arms 15, a plurality of guide wheels 16a, 16b, 16c and 16d, and a pair of right and left sub-cushions 17.

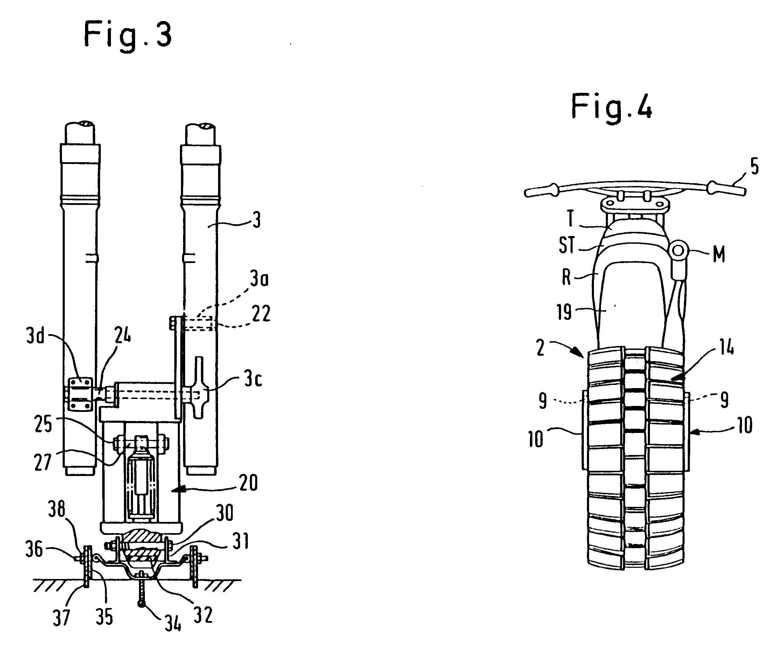

The vehicle body is provided with a rear cushion 18, an air cleaner case 19 (see Figure 4), a front fender F, a fuel tank T, a seat ST, a rear fender R, and a muffler M.

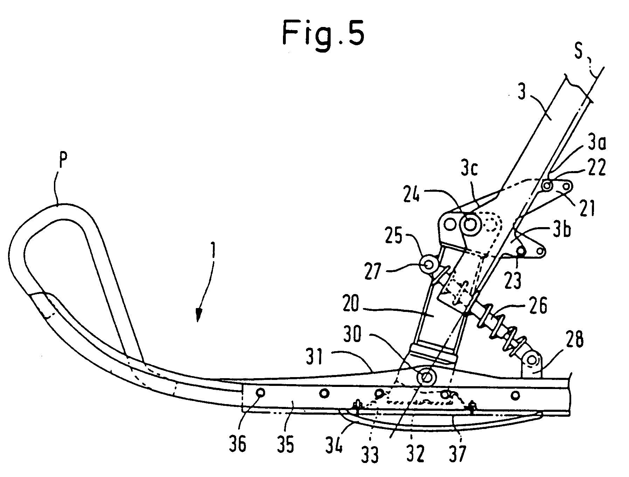

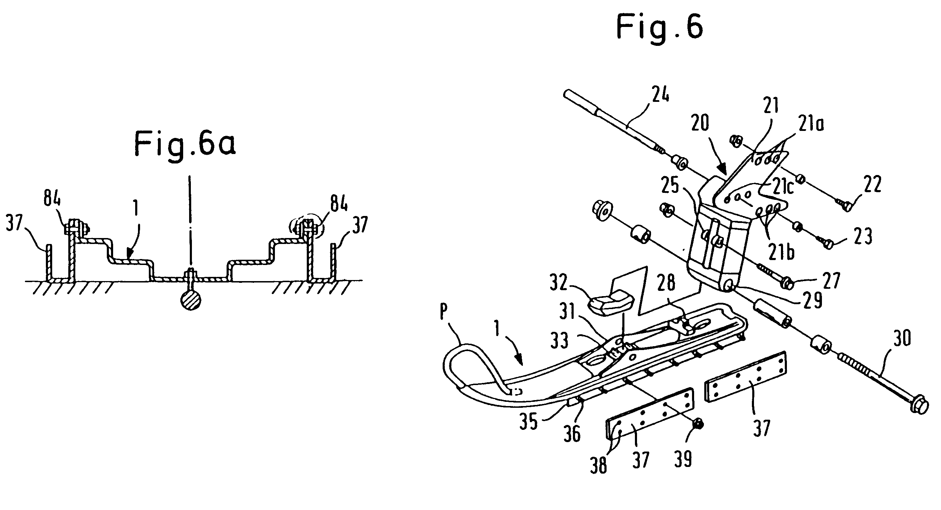

Figure 5 is an enlarged side view of the steering ski 1, and Figure 6 is an exploded perspective view thereof. The steering ski 1 is connected through a ski bracket 20 to a lower end portion of the front fork 3. The ski bracket 20 is formed at its upper end with a wing-like mounting portion 21 having three groups of mounting holes 21a, 21b and 21c, each group consisting of three mounting holes. The front fork 3 is originally formed with a pair of mounting portions 3a and 3b for mounting a brake caliper for motorcycle use and with the supporting portion 3c for the front axle of a motorcycle frontwheel. Accordingly, the brake caliper mounting portions 3a and 3b and the front axle supporting portion 3c are utilized as mounting portions for mounting the wing-like mounting portion 21 of the ski bracket 20. Specifically, a pair of bolts 22 and 23 are inserted through two of the mounting holes 21a and 21b, as desirably selected, and are fixed to the mounting portions 3a and 3b of the front fork 3, respectively. Similarly, a shaft 24 is inserted through one of the mounting holes 21c, as desirably selected, and is fixed to the mounting portion 3c of the front fork 3. Thus, the mounting portion 21 of the ski bracket 20 is fixed to the front fork 3 at the three positions. The shaft 24 is supported at its one end to the bracket 3d (see Figure 3) detachably mounted to one of the arm portions of the front fork 3. Further, the mounting position of the ski bracket 20 to be mounted to the front fork 3 can be adjusted in three-stepwise positions longitudinally of the vehicle body by selecting the respective mounting holes 21a, 21b and 21c.

The ski bracket 20 is formed at its front intermediate position with a mounting portion 25 for mounting one end of a front sub-cushion 26 by means of a bolt 27. The other end of the front sub-cushion is connected to a bracket 28 formed on the steering ski 1. The ski bracket 20 is further formed at its lower end portion with a transverse throughhole 29 for inserting a ski axle 30 therein with collars. The steering ski 1 is formed with a mounting portion 31 for mounting the ski bracket 20 so that the steering ski may be rotated about the ski axle 30.

A lower end surface of the ski bracket 20 is disposed to abut against an elastic member in the form of a rubber buffer 32. The rubber buffer 32 is received in a recess of a housing 33 that is welded to an upper surface of the steering ski 1. A rod-like center runner 34 is mounted on a lower surface of the steering ski 1 at a transversely central position thereof to extend in a longitudinal direction of the steering ski 1.

A pair of right and left elongated edge mounting plates 35 are welded to the opposite sides of the steering ski 1. Each of the mounting plates 35 is formed with a plurality of mounting bolts 36 projecting laterally outwardly. A pair of front and rear plate-like edge members 37 are mounted on each mounting plate 35. Each of the edge members 37 is formed with a plurality of mounting holes 38 arranged in upper and lower lines. The mounting bolts 36 of each mounting plate 35 are inserted through the mounting holes 38 of the edge members 37, and are tightened to a plurality of nuts 39, thus fixedly mounting the edge members 37 to the mounting plates 35. The mounting position of each edge member 37 can be adjusted longitudinally and vertically of the steering ski 1 by selecting the appropriate mounting holes 38. Reference character P designates a protector for preventing the steering ski 1 from piercing the snow. The protector P also serves as a grip for traction of the steering ski 1.

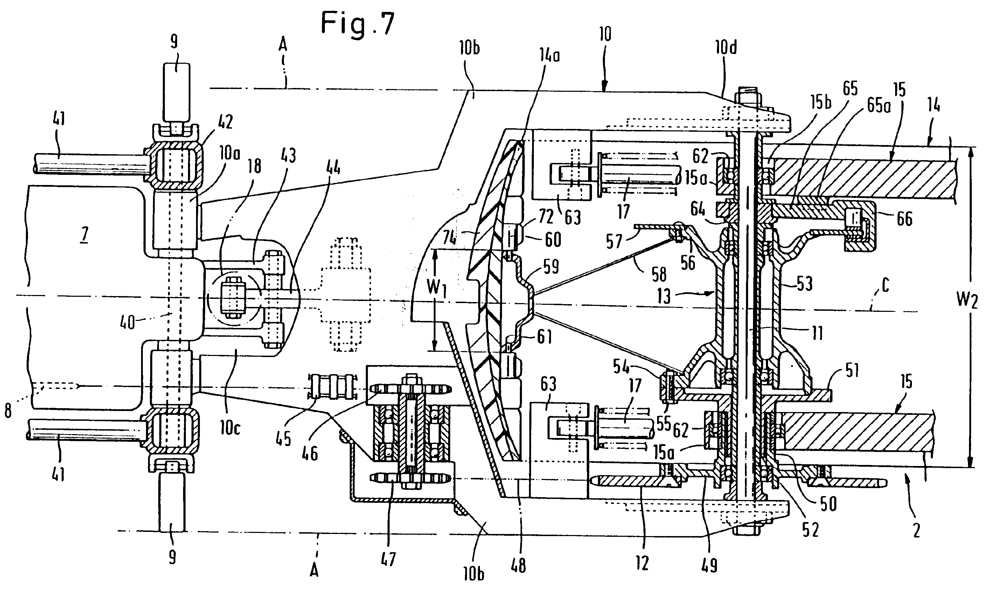

The rear fork 10 is formed at its front end with a pair of pivot portions 10a to be pivotably connected, for example, to a rear portion of the engine 7 by a common shaft 40. The shaft 40 extends through a pair of reinforcing gussets 42 of right and left lower pipes 41 constituting a part of the vehicle body frame 6. The right and left footrests 9 are mounted at the opposite extended ends of the shaft 40 on opposite sides of the vehicle centerline, indicated as C. The amount of lateral projection of the footrests 9 is set such that the free end of each footrest extends to line A (Figure 7) from each shoulder 10b defining the maximum width of the rear fork 10.

A cushion link 43 is pivotably mounted at its one end to a central portion of a cross member (not shown) provided beneath the shaft 40, and the other end of the cushion link 43 is connected to a cushion bracket 44 pivotably mounted at its one end to a bottom portion of the rear fork 10. The cushion bracket 44 is connected to the lower end of the rear cushion 18 that passes through a recess 10c in the rear fork 10.

The rear fork 10 is provided at its front left position with a first intermediate sprocket 46 to be driven by the drive sprocket 8 through a first chain 45 and with a second intermediate sprocket 47 supported coaxially with the first intermediate sprocket 46 on the outside thereof. The second intermediate sprocket 47 is connected through a second chain 48 to the driven sprocket 12. A flange member 49 mounting the driven sprocket 12 is rotatably mounted on the rear axle 11 which is fixedly supported at its opposite ends to the rear end portions of the right and left arm portions 10d of the rear fork 10. A boss portion 50 of the flange member 49 extends inwardly, and is spline connected to a boss portion 52 of another flange member 51. The flange member 51 is fixedly connected by a plurality of bolts 55 to a left flange portion 54 of a hub 53 of the driving wheel 13, and a brake disc 57 is fixedly connected to a right flange portion 56 of the hub 53. The hub 53 is connected through a plurality of spokes 58 to a rim 59 having a diameter larger than the hub 53 and formed concentrically therewith. A plurality of round pins 60 adapted to drivingly engage the endless belt 14 are provided on the opposite side surfaces of the rim 59 at circumferentially equal intervals in such a manner as to project laterally outwardly. As shown, a shaft portion 61 of each round pin 60 extends into the side of the rim 59 and the round pin 60 is welded thereto.

Front end portions 15a of the right and left rear arms 15 are disposed inside of the right and left arm portions 10d of the rear fork 10, and are rotatably supported through a pair of bearings 62 to the rear axle 11. The driven sprocket 12 is located between the left arm portion 10d and the left rear arm 15. A pair of right and left brackets 63 for mounting the front ends of rear sub-cushions 17 are provided on the inside surfaces of the right and left arm portions 10d. The rear ends of the rear sub-cushions 17 are mounted to the front end portions of the rear arms 15. Either of the rear sub-cushions 17 may optionally be removed.

As shown in Figure 1, the road clearance H of the rear axle 11 is set to be higher than the minimum road clearance L of the vehicle body under the condition where the driver rides on the vehicle. For braking, a collar 64 is mounted on the rear axle 11, and a caliper bracket 65 for supporting a brake caliper 66 is mounted on the collar 64 in such a manner that the brake caliper 66 may slidingly contact the brake disc 57.

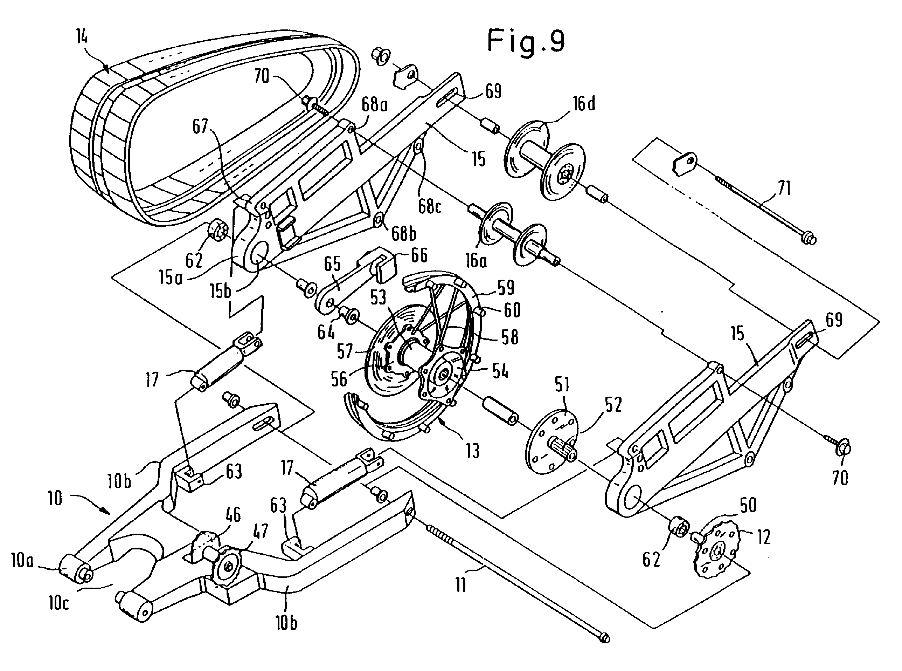

As shown in Figure 9, both rear arms 15 have the same gridlike construction. The front end portions of the rear arm 15 is formed with a connection hole 15b for receiving the bearing 62. Further, the front upper end portion of the rear arm 15 is formed with a mounting portion 67 for attaching the rear end of the rear sub-cushion 17. The mounting portion 67 has a plurality of mounting holes arranged vertically so that the position of attachment of the rear sub-cushion 17 can be vertically adjusted. Three mounting bosses 68a, 68b and 68c are formed at an intermediate portion of each rear arm 15 for supporting the guide wheels 16a, 16b and 16c, respectively, and a mounting slot 69 is formed at a rear end portion of the rear arm 15 for supporting the rearmost guide wheels 16d. These guide wheels 16a to 16d are designed to idly rotate, and shaft portions thereof are fixed by bolts 70 and 71 to the rear arm 15. While each of the guide wheels 16a to 16d forms a pair of wheels in the preferred embodiment, it should be understood that a single wheel or three or more wheels may alternatively be employed. The axle weight to be loaded on the rear axle 11 is set to be substantially equal to the axle weight to be loaded on the supporting shaft (bolt 71) of the rearwardmost guide wheels 16d. However, a difference in the axle weight between the rear axle 11 and the bolt 71 in the range of about ± 20 % is permitted.

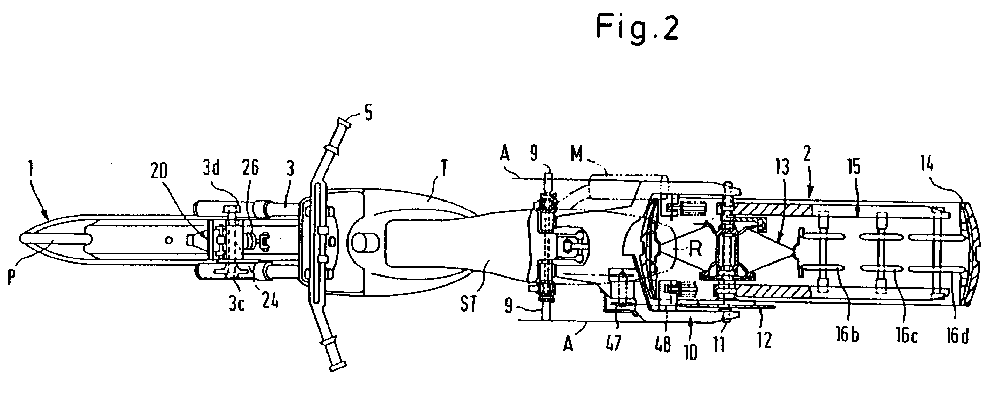

As shown in Figure 7, the endless belt 14 has an extensive width W₂, which is set to be slightly smaller than the inner dimension between the right and left arm portions 10d, and the rim 59 has a width W₁, which is set to be preferably about 30 % to 50 % of the width W₂ of the endless belt 14. As shown in Figures 2, 4, 7 and 8, the endless belt 14 having such a great width can protectively enclose many of the operating elements of the device, including the rear axle 11, the rear arms 15, the guide wheels 16a to 16d, the rear sub-cushions 17, the brake caliper 66, etc.

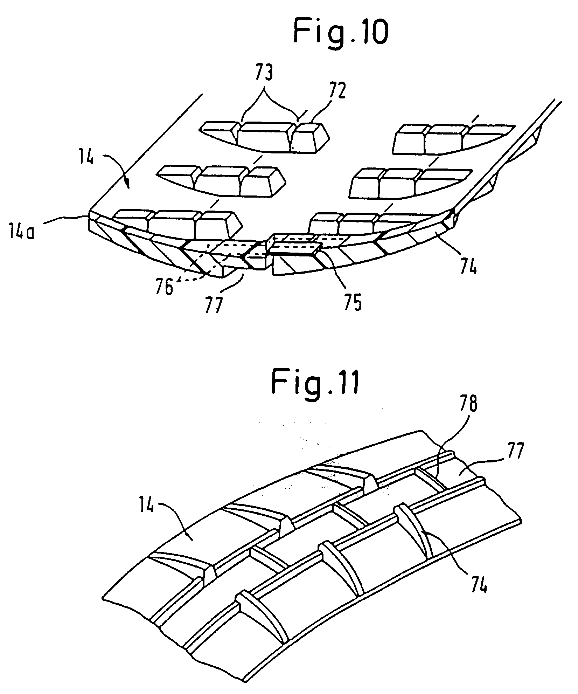

Figures 10 and 11 are enlarged perspective views of a part of the endless belt 14, showing inside and outside surfaces thereof, respectively. As shown in Figure 10, a base 14a of the endless belt 14 is integrally formed on its inner surface with rows of wall members 72 arranged at equal intervals. Each row of wall members 72 extends substantially across the width of the endless belt 14. Each of the round pins 60 fixed to the rim 59 of the driving wheel 13 is adapted to engage the belt between adjacent rows of the wall members 72. Each wall member 72 is preferably formed with a plurality of notches 73 for the purpose of facilitating lateral flexing of the endless belt 14 upon turning of the vehicle thereby to improve the vehicle's turning performance as hereinafter more fully explained.

The base 14a of the belt 14 is integrally formed on its outer surface with a plurality of propelling lugs 74 arranged at circumferentially equal intervals, each row of the lugs 74 extending across the width of the endless belt 14. The base 14a and each lug 74 are formed with an arcuate cross section so as to ensure easy turning of the vehicle. A plurality of core members 35 are embedded in a central region of the belt 14 in substantially alignement with the lugs 74. The wall members 72 are formed on the interior surface of the belt 14 in substantial overlying relation to the lugs 74

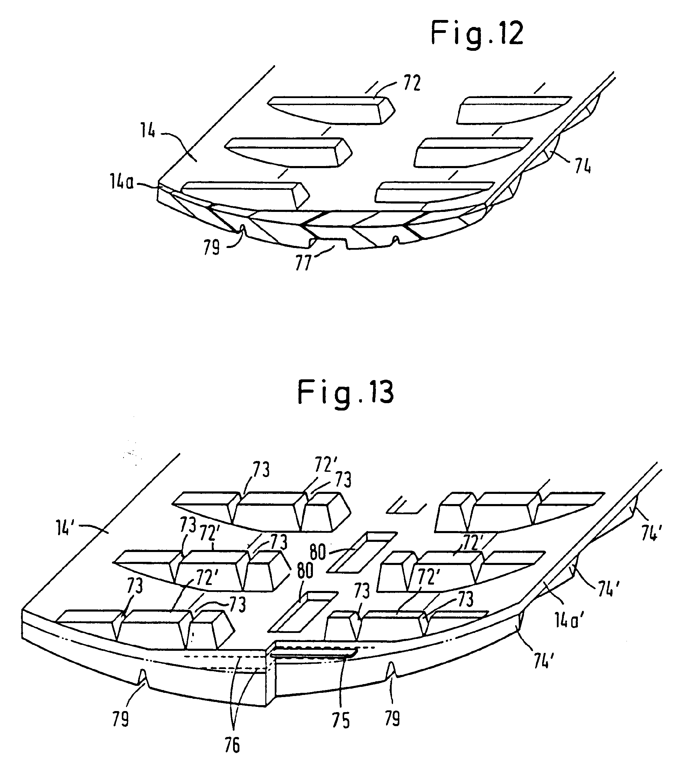

Figure 13 is a perspective view of a part of a slightly modified form of endless belt 14', and shows a sectional surface cut across the width thereof. The endless belt 14' is formed of a rubber material, and it is generally comprised of an endless base 14a', a plurality of propelling lugs 74' formed on an outer surface of the endless base 14a', and a plurality of wall members 72' formed on an inner surface of the endless base 14a'. The propelling lugs 74' are arranged in circumferentially equally spaced relationship from each other. Each lug 74' extends across the width of the endless base 14a', and has an arcuate cross section. A plurality of core members 75 are embedded in the endless base 14a' at positions corresponding to the propelling lugs 74', and a plurality of tension cords 76 are also embedded in the endless base 14a' along the core members 75. In the sectional surface shown in Figure 13, the right half portion shows a sectional surface cut along a transversely extending center line of one of the propelling lugs 74' (i. e., a line dividing the lug 74' into front and rear parts), while the left half portion shows a sectional surface cut along a line of intersection between the propelling lug 74' and the endless base 14a', with the core member 75 not being cut.

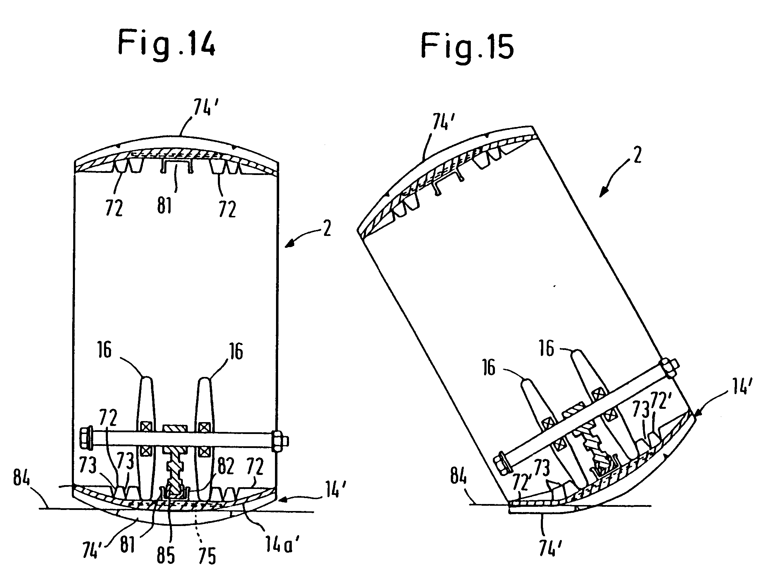

As is apparent from Figure 13, the core member 75 is embedded at the transversely central portion of the endless base 14a', so as to reinforce the propelling lug 74' at this portion. That is, the core member 75 has a length in the transverse direction of the endless belt 14' smaller than the width thereof, and has a width in the longitudinal or circumferential direction of the belt about equal to the width of the propelling lug 74'. The other portion of the propelling lug 74' not reinforced by the core member 75 is reinforced by the walled members 72'. That is, each walled member 72' is so located as to correspond to each propelling lug 74', and is composed of a pair of right and left sections extending transversely of the endless base 14a' from positions corresponding to substantially opposite ends of the core member 75 toward the opposite side edges of the endless base. Thus, the propelling lug 74' at its right and left portions not reinforced by the core member 75 is nonetheless given a sufficient stiffness by the right and left sections of the wall member 72', thereby exhibiting a sufficient propelling force upon turning of the vehicle. Each wall member 72' is preferably formed with two notches 73 for the purpose of easy deformation of the endless belt 14' upon turning of the vehicle as shown in Figure 15.

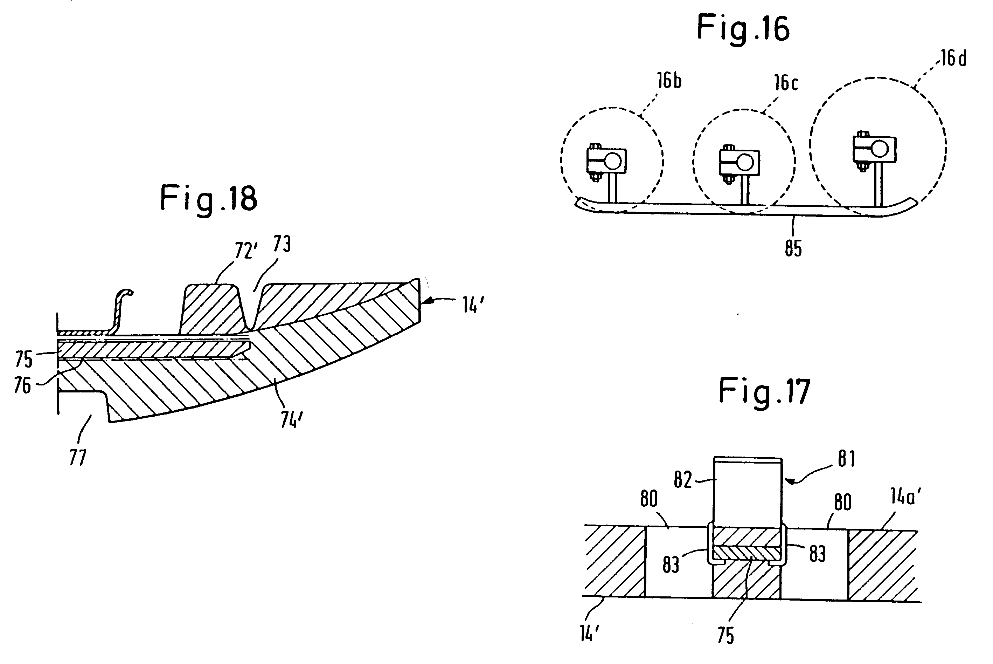

Furthermore, the endless belt 14' may, as shown, be formed at its transversely central portion with a plurality of through-holes 80. Each of the through-holes 80 is located between the circumferentially adjacent rows of the wall members 72'. As shown in Figures 14 and 17, a clip 81 is fixed to a portion of the endless base 14a' between the adjacent through-holes 80. That is, each clip 81 is comprised of a pair of right and left upward extensions 82 projecting from the inner surface of the endless belt 14' and a pair of front and rear downward extensions 83 projecting into the through-holes 80. The downward extensions 83 extend along the inside surfaces of the through-holes 80 in such a manner as to embrace the core member 75, and the free ends of the downward extensions 83 are fixedly inserted into the endless belt 14'.

As shown in Figure 14, the lower travelling portion of the endless belt 14' is urged from its inner surface by the intermediate wheels 16 and a slide rail 85, so that the outer surface of the endless base 14a' is pressed on the snow surface 84, and the propelling lugs 74' are forced into the snow, thereby providing a propelling force. During travelling of the endless belt 14', the right and left upward extensions 82 of each clip 81 fixed to the endless belt 14' are guided by the slide rail 85 to thereby prevent transverse slippage of the endless belt 14'. Further, although frictional heat is generated due to sliding contact of the endless belt 14' with the slide rail 85 during travelling of the endless belt 14', the heat can be effectively removed by the snow entering the through-holes 80 of the belt.

In the case of turning the snow vehicle to the left from the straight travelling condition shown in Figure 14, for example, the vehicle body is inclined to the left by the rider, as shown in Figure 15. In this case, as the outer surface of the endless belt 14' is arcuate in cross section, the endless track type driving device 2 readily follows the inclination of the vehicle body as shown in Figure 15. Particularly, the left portion of the lower travelling portion of the endless belt 14' on the inclined side is readily deformed along two longitudinal lines that connect notches 79 aligned in the longitudinal direction of the endless belt 14'. Accordingly, the left portion of the lower travelling portion is brought into substantially flat and wide contact with the snow surface 84, thus ensuring a wide contact area. Further, as the propelling lugs 74' at the left portion in this case are reinforced by the wall members 72', the lugs are forced into the snow to ensure a sufficient propelling force.

In the described embodiment, each of the wall members 72' is formed with the two notches 73 for the purpose of easy deformation of the endless belt 14' upon turning of the vehicle, and as shown in Figure 13, each propelling lug 74' is also formed at its right and left portions with two notches 79. Accordingly, the deformation of the endless belt 14' upon turning of the vehicle can be more easily accomplished.

A modification of the sectional shape of the endless belt 14' is shown in Figure 18. In this arrangement, each wall member 72' is formed with a single notch 73, and each propelling lug 74' is formed at its transversely central portion with a recess 77 instead of the two notches 79 mentioned above.

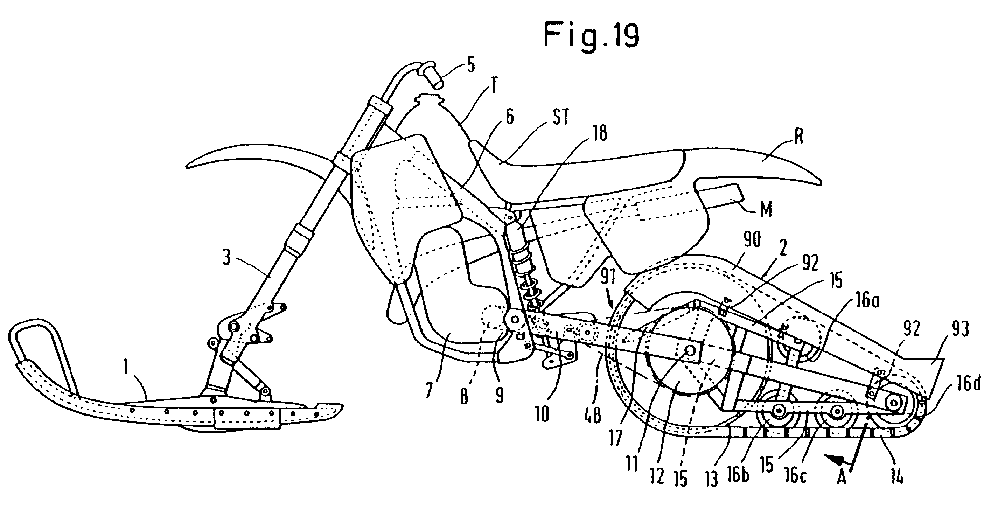

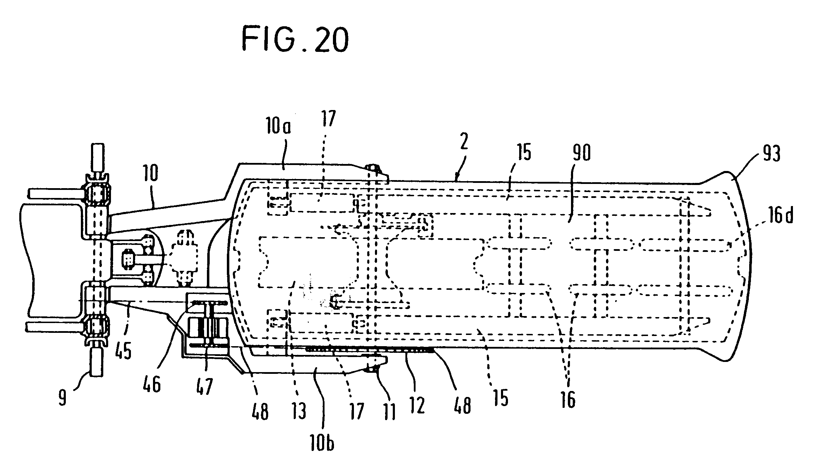

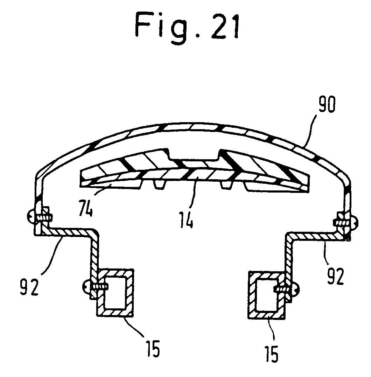

Figure 19 is a view similar to Figure 1 illustrating the endless track cover. As shown, the rear fork 10 is pivotably supported at its front end to a pivot at the vehicle body frame 6. The track belt cover 90 is provided over the endless track device 2 with a small clearance space 91 being defined between the rear fork 10 and the belt cover 90. The belt cover 90 extends along the upper portion of the track belt 14 and is bent at its opposite side portions to cover the upper and opposite side portions of the track belt. As shown in Figures 19 and 21, the belt cover 90 is provided at its opposite side portions with a plurality of mounting stays 92, and is fixedly mounted through the mounting stays to the rear arms 15. As shown in Figures 19 and 20, the rear end portion of the belt cover 90 is formed into an expanded portion 93 projecting upwardly and laterally so that snow, or the like, raised by the track belt 14 at the rearmost guide rollers 16d during running may be hindered from being scattered forwardly.

In operation, the snow raised by the rotation of the track belt 14 during running is prevented from being scattered upwardly and forwardly by the provision of the belt cover 90 above the track belt. Accordingly, the snow raised is prevented from reaching a position near the seat ST and an air intake system such as includes the air cleaner 19. Further, since the belt cover 90 is integrally fixed to the endless track device 2 defined by the rear arms 15 and the rear fork 10, the assembly including the belt cover 90 and the endless track device 2 can be swung about the rear axle 11 with the space between the belt cover 90 and the track belt 14 being maintained constant. Therefore, the effect of preventing the scattering of the snow can be maintained constant at all times. Also, while the rear fork 10, itself, is swingable independently of the endless track device 2, possible interference between the rear fork 10 and the front end of the belt cover 90 can be avoided by the definition of the space 91.

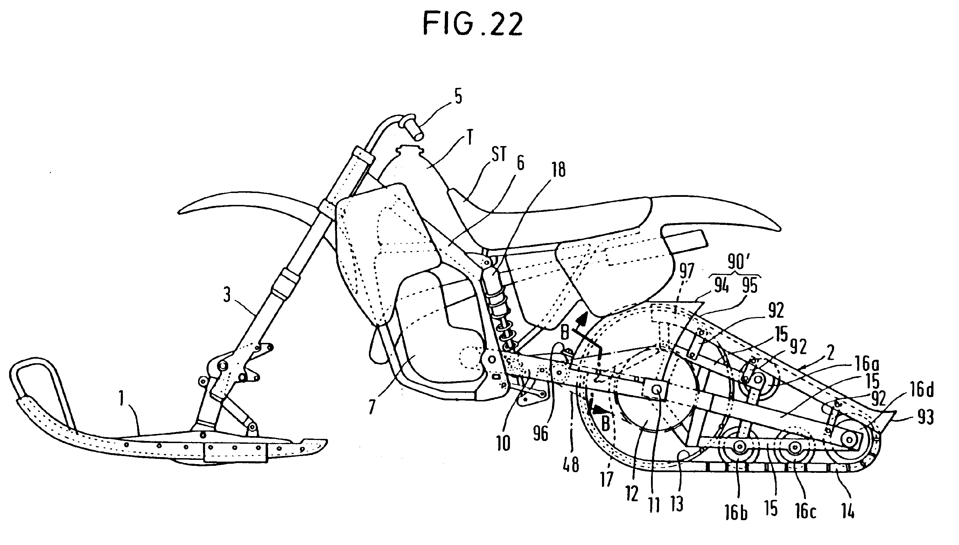

Figures 22 to 25 show another embodiment of the cover wherein the same or corresponding parts as in the previous embodiment are designated by the same reference numerals, and the explanation thereof will be omitted hereinafter.

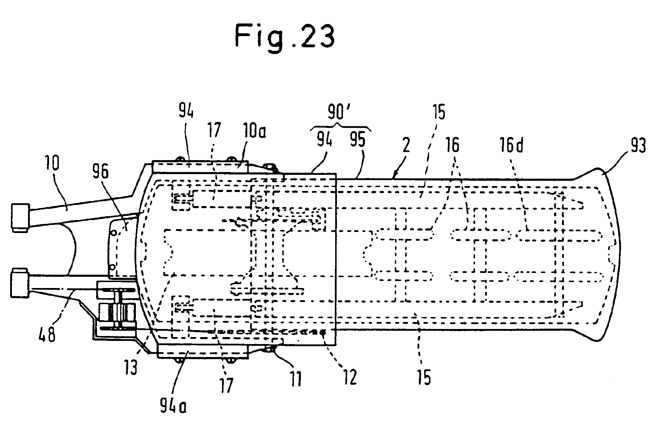

As is apparent from Figures 22 to 24, the belt cover, indicated as 90', is divided into front and rear cover elements 94 and 95. The rear cover element 95 is fixedly mounted to the rear arms 15 in the same manner as the first preferred embodiment, so that the rear cover element may be swung together with the endless track device 2. On the other hand, the front cover element 94 is formed with a front mounting portion 96 to be fixed by screws to the upper surface of the rear fork 10. The front cover 94 is further formed with a pair of right and left side mounting portions 94a to be fixed by screws to the outer side surfaces of the arm portions 10a of the rear fork 10, so that the front cover may be swung together with the rear fork. As shown in Figures 22 and 23, a front end portion 97 of the rear cover 95 is laid inside the front cover 94 at a rear end portion thereof to overlap each other.

In operation, when the rear fork 10 and the rear arms 15 are relatively swung during running of the vehicle, the overlapped portions of the rear cover element 95 and the front cover element 94 are relatively moved to suppress the creation of a gap therebetween. Therefore, the upper portion of the track belt 14 is reliably covered with the front cover element 94 and the rear cover element 95, thereby preventing the forward scattering of the raised snow. Furthermore, the space 91 defined between the rear fork 10 and the belt cover 90 in the first preferred embodiment is filled by the front cover element 94 in the second preferred embodiment. Therefore, the possibility of snow scattering through the space 91 toward the rear cushion 18 and the engine 7 can be prevented by the front cover element 94. The front cover element 94 also serves as a chain cover for covering the second chain 48.

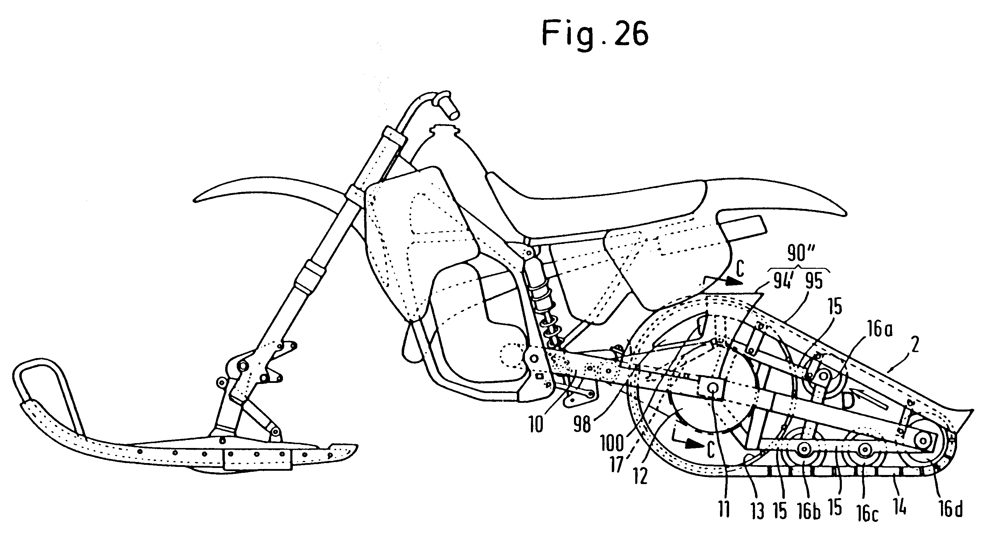

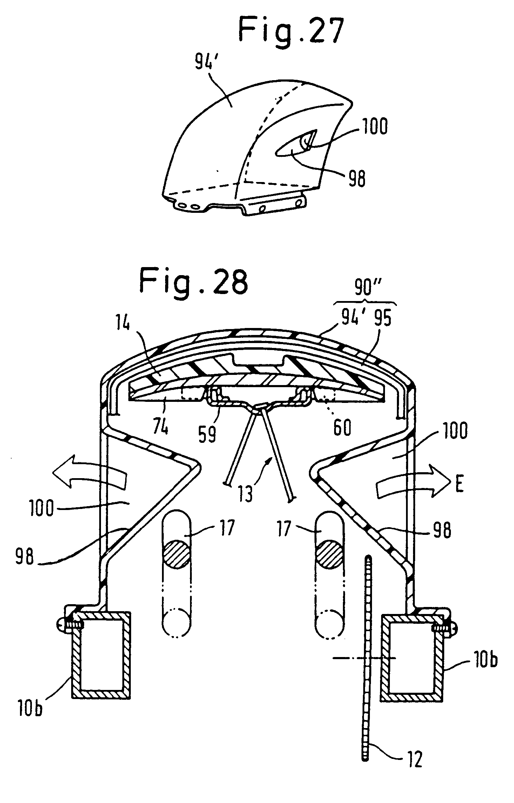

Figures 26, 27 and 28 show another embodiment of the present invention having the same construction as the previously described embodiment, except that the front cover element 94' is formed on its opposite side surfaces with a pair of recesses 98, each having an outlet opening 100 directed toward the front side of the front cover element 94' (see Figure 27). With this construction, the snow adhering to the inside surface of the track belt 14 and scattering forwardly, as shown by an arrow D in Figure 26, is discharged from the outlet openings 100 of the recesses 98 as shown by arrows E in Figure 28. Therefore, it is possible to eliminate the possibility of the snow staying inside the front cover element 94 to generate a running resistance.

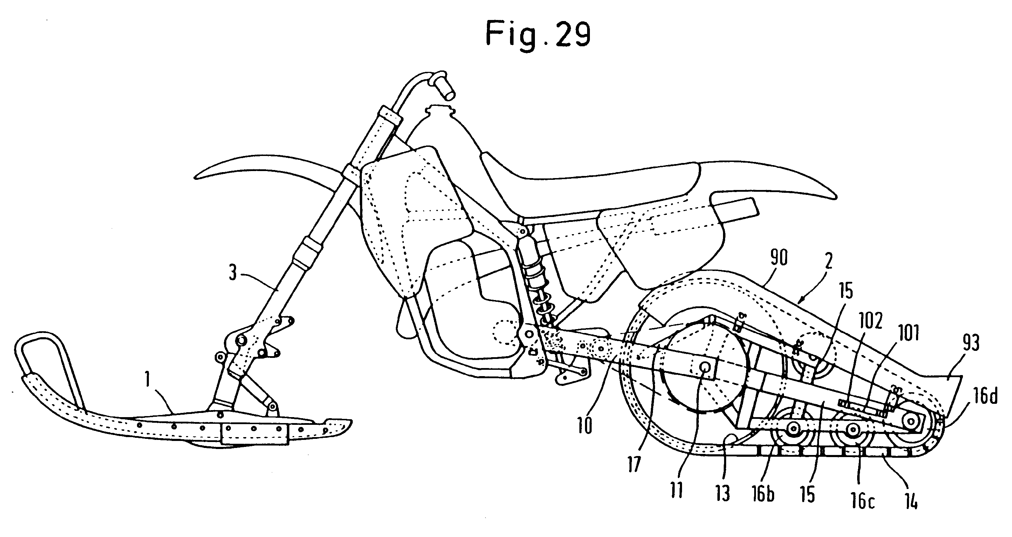

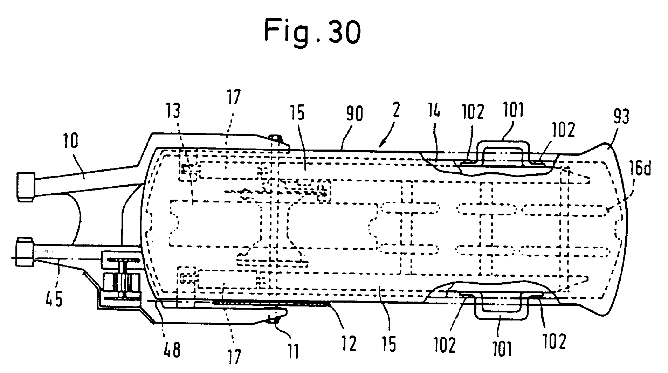

Figures 29 and 30 show an embodiment of the present invention having the same construction as the earlier described embodiment except that a pair of grab rails 101 each having a substantially U-shaped configuration, as viewed in plan, are fixed by bolts 102 to the outer side surface of the right and left rear arms 15 at the rear portions thereof. With this construction, when there arises a necessity of lifting the endless track device 2 upon stacking (i. e., contact of the vehicle body with the snow surface that causes idle rotation of the driving wheel) or manual changing of the travelling direction of the vehicle, the endless track device 2 can be easily lifted by gripping the grab rails 101 without being hindered by the belt cover 90.

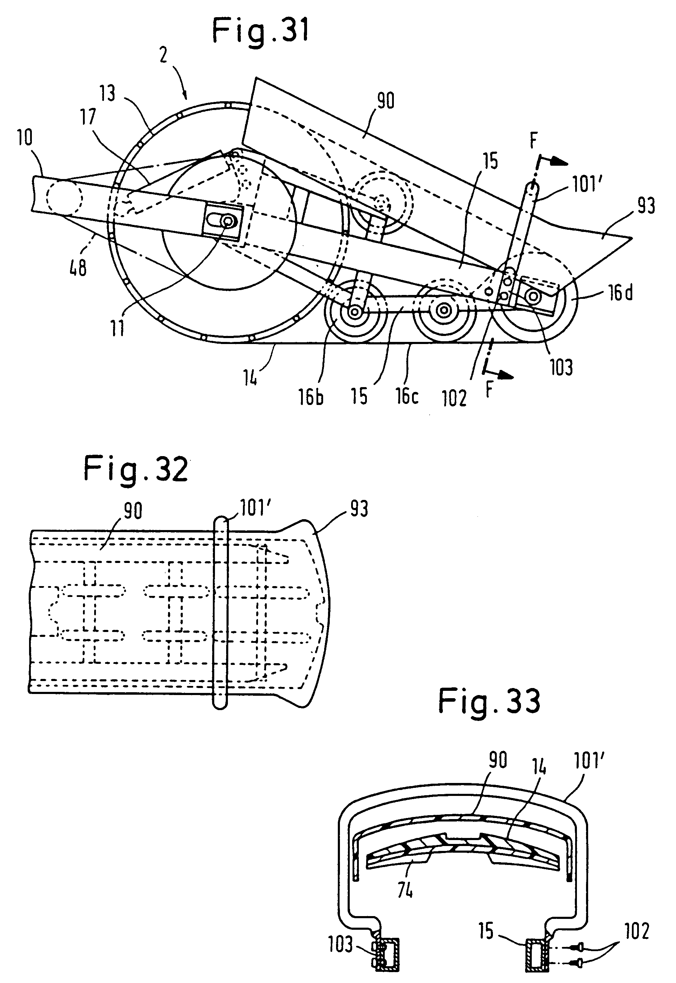

Figures 31, 32 and 33 show a revision of this arrangement wherein a vertically arched grab rail 101' is so provided as to surround the endless track device 2 at the rear end portion thereof. As shown in Figure 33, the grab rail 101' is formed at its opposite lower ends with a pair of flattened portions 103 to be fixed by bolts 102 to the outer side surfaces of the rear arms 15. The grab rail 101' is located forwardly of the expanded portion 93 of the belt cover 90, and as shown in Figure 32, the amount of lateral projection of the grab rail 101' is set to be smaller than that of the expanded portion 93, so as to make the vehicle body slim.

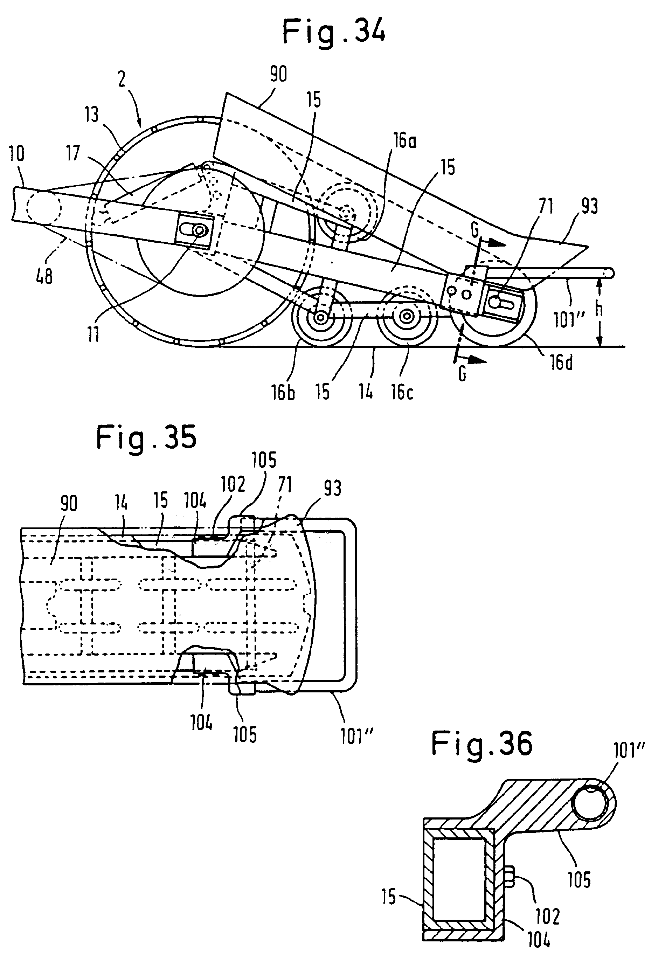

Figures 34, 35 and 36 show an embodiment of the present invention similar to the previously described embodiment. In this embodiment a pair of sectionally U-shaped brackets 104 are fixed by bolts 102 to the outer side surfaces of the rear arms 15, and the grab rail 101'' having a U-shaped configuration is connected to the brackets 104. Each of the brackets 104 is formed at its upper end with a sidewardly projecting portion 105 for connection with the grab rail 101''. The grab rail 101'' extends rearwardly from the projecting portions 105 of the brackets 104 in substantially parallel relationship to the snow surface. The grab rail 101'' is vertically disposed to be lower than the expanded portion 93 of the cover 90, so as not to interfere with the same. As the projecting portions 105 are formed at the upper ends of the brackets 104, a relatively large clearance h of the grab rail 101'' from the snow surface can be ensured as shown in Figure 34. Furthermore, the shaft 71 of the guide wheels 16d can be easily moved longitudinally of the endless track device 2 in the case of adjusting the tension of the track belt 14. Moreover, as the grab rail 101'' is located below the expanded portion 93, its width can be made nearly equal to the width of the track belt 14, thereby slimming the vehicle body and improving its ability to pass through narrow spaces. Additionally, the grab rail 101'' in this preferred embodiment also serves as a rear bumper.

According to this aspect of the invention, the cover for covering the track belt is located just over the endless track device, and is mounted to the rear arms. Accordingly, the track belt cover can be swung together with the endless track device. While the rear fork and the rear arms are relatively swung during running of the vehicle, the small space between the track belt cover and the track belt is maintained constant at all times, thereby effectively preventing the snow or the like caught up by the track belt from being scattered forwardly.

The track belt cover can be comprised of a front cover component mounted to the rear fork and a rear cover component mounted to the rear arms. Accordingly, even when the rear fork and the rear arms are relatively swung, the upper and front portions of the track belt near the rear fork can be reliably covered with the front cover component. Thus, the area of the track belt to be covered with the cover can be increased to thereby reliably prevent snow, or the like, from being scattered forwardly toward the engine and the associated parts mounted to the vehicle body.

Also, outlet openings can be formed through the opposite side surfaces of the front cover component such that it is possible to prevent the snow, or the like, migrating forwardly along the inside surface of the track belt from staying inside the front cover component where it could create an increase in the apparatus running resistance.

By means of a grab rail mounted to the rear arms, the endless track device can be easily lifted. Therefore, in the case of stacking or changing the travelling direction at a narrow place, for example, the endless track device can be easily handled without being hindered by the track belt cover. Additionally, the grab rail can be utilized as a bumper.

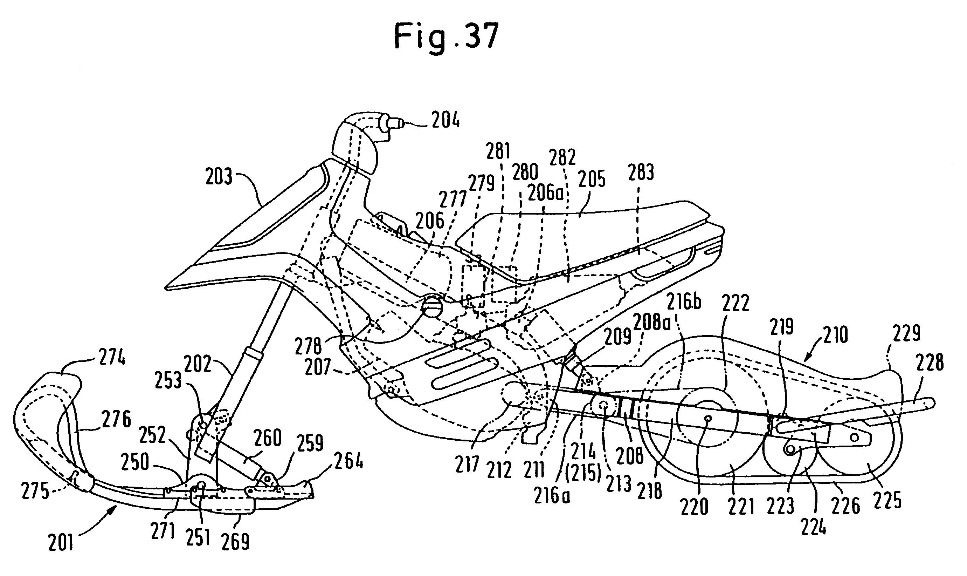

The snow vehicle according to Fig. 37 to 43 is primarily constructed of a steering ski 201, a front fork 202, a cover 203 for generally covering a vehicle body, a handle 204, a seat 205, a frame 206, an engine 207, a rear fork 208, a rear cushion 209, a driving device 210, and brackets 206a and 208a provided on the frame 206 and the rear fork 208, respectively, for mounting the rear cushion 209.

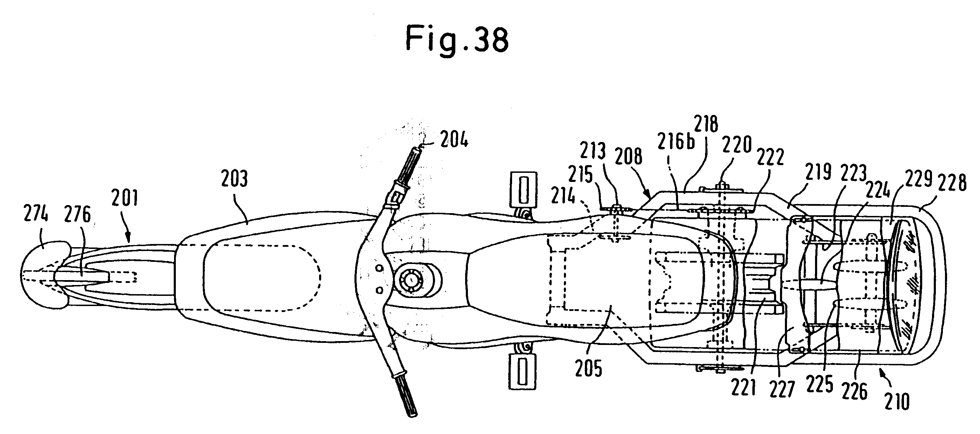

The rear fork 208 is swingably mounted at its front ends through a pivot 211 to a pair of pivot plates 212 provided at right and left rear lower portions of the frame 206. As shown in Fig. 38, a pair of intermediate sprockets 214 and 215 are coaxially mounted on an intermediate shaft 213 at opposite ends thereof, and the intermediate shaft 213 is supported to an intermediate portion of the rear fork 208. The intermediate sprocket 214 is connected through a first chain 216a to a drive sprocket 217 to be driven by the engine 207. The rear fork 208 is constructed of a pair of right and left laterally expanded portions 218 bent laterally outwardly at a position just behind the intermediate shaft 213 and extending rearwardly in substantially parallel relationship to each other, and a pair of right and left laterally converged portions 219 extending rearwardly continuously from the rear ends of the expanded portions 218 and inclined in such a manner as to be converged toward the lateral center line of the vehicle.

An axle 220 extends laterally between the right and left expanded portions 218 of the rear fork 208, and a drive wheel 221 and a driven sprocket 222 are rotatably supported on the axle 220. A pair of right and left wheel brackets 223 are fixed by welding to the rear ends of the converged portions 219, and a small-diameter guide wheel 224 and a pair of large-diameter guide wheels 225 are rotatably supported through guide wheel shafts 245 and 246, respectively, fixed to the wheel brackets 223. An endless belt 226 is wrapped around the drive wheel 221 and the guide wheels 224 and 225. Thus, the driving device 210 is constructed of the drive wheel 221, the driven sprocket 222, the guide wheels 224 and 225 and the endless belt 226.

As shown in Fig. 38, a laterally elongated scraper 227 is fixedly mounted on the upper surfaces of the right and left converged portions 219 at the intermediate portions thereof, and a U-shaped bumper 228 is provided to extend rearwardly from the outer side surfaces of the converged portions 219 at the intermediate positions thereof in such a manner as to be inclined upwardly. The bumper 228 is fixed to the converged portions 219 by welding. However, it may be bolted to the converged portions 219. A cover 229 is provided over the endless belt 226. The endless belt 226 shown in Fig. 37 is illustrated in a cross section showing a laterally central wall member of the endless belt 226.

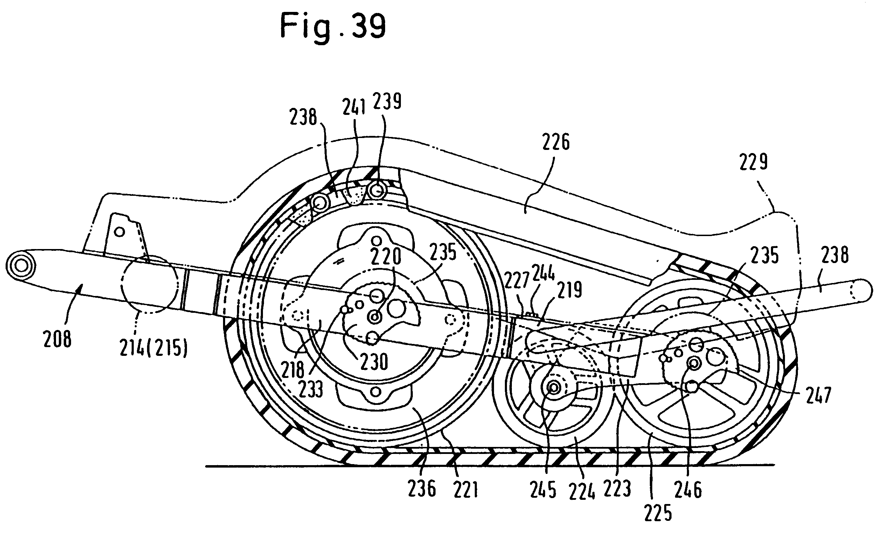

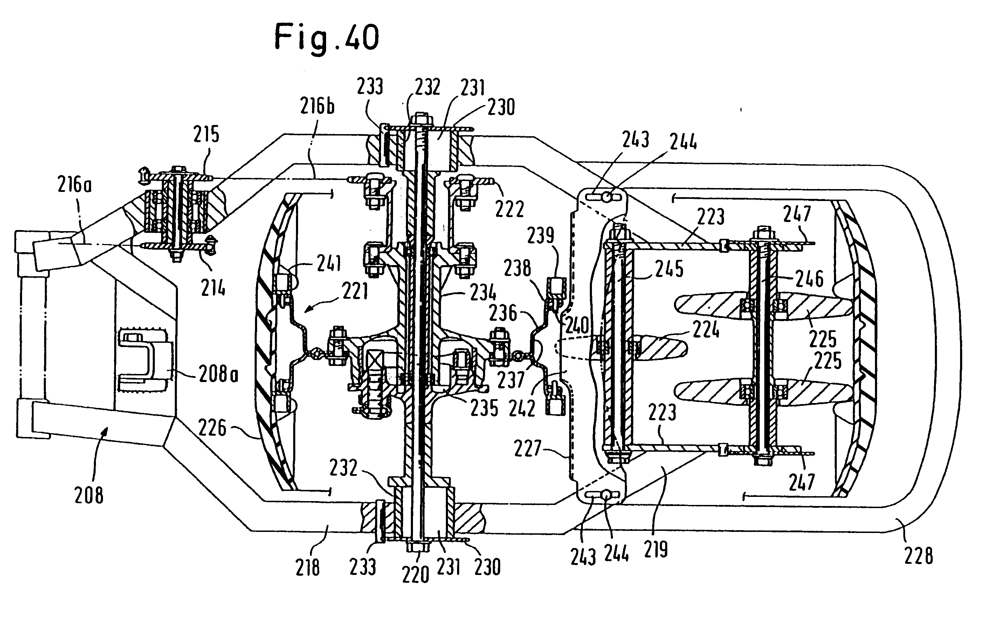

Fig. 39 is an enlarged vertical sectional view of the driving device 210, and Fig. 40 is a horizontal cross section of Fig. 39, provided that the cover 229 is not shown. The axle 220 is formed as an elongated bolt, and it is supported at its opposite ends to the expanded portions 218 of the rear fork 208 through a pair of right and left chain adjusters. Each of the chain adjusters is constructed of an eccentric plate 230 formed at its outer periphery with a waved groove, a holder 232 supported to the expanded portion 218 and formed with a longitudinally elongated hole 231 through which the axle 220 is inserted, and a stopper rod 233 embedded in the expanded portion 218 and projecting outside to engage the waved groove of the eccentric plate 230.

The driven sprocket 222 is fixedly mounted to one lateral end surface of a hub 234 of the drive wheel 221, and a drum portion 235 incorporating a known drum brake mechanism is provided on the other lateral end surface of the hub 234. A rim 236 of the drive wheel 221 is bolted to an outer circumference of the drum portion 235. The rim 236 is formed at its central outer circumference with an annular recess 237, and the outer circumference of the rim 236 is formed at its laterally opposite edges with a pair of curled portions 238. A plurality of hollow pins 239 each having a leg portion 240 are welded to the outside surface of the curled portions 238 in such a manner that the leg portions 240 are inserted into the curled portions 238, thus projecting laterally outwardly from the curled portions 238 of the rim 236. The hollow pins 239 are arranged at given intervals to engage a plurality of laterally elongated lugs 241 formed on an inner surface of the endless belt 226 and arranged at given intervals. The scraper 227 is formed at its laterally central portion with a projection 242 projecting into the recess 237 of the rim 236 (see Fig. 40). The scraper 227 is formed at its opposite end portions with a pair of longitudinally elongated holes 243 for engaging a pair of bolts 244, so that the scraper 227 may be longitudinally adjustably mounted on the upper surfaces of the converged portions 219 at the intermediate positions thereof. As the scraper 227 laterally extends between the right and left converged portions 219 of the rear fork 208 as mentioned above, the length of the scraper 227 can be made relatively short, resulting in an advantage from the viewpoint of rigidity.

A front portion of the endless belt 226 is accommodated in a space defined inside the right and left expanded portions 218, while the right and left converged portions 219 except the portions connected to the expanded portions 218 as well as the right and left wheel brackets 223 are accommodated in a space defined inside the endless belt 226.

The front and rear guide wheel shafts 245 and 246 are fixedly supported to the right and left wheel brackets 223. The small-diameter guide wheel 224 is rotatably supported on the front guide wheel shaft 245 at a central position thereof, while the large-diameter guide wheels 225 are rotatably supported on the rear guide wheel shaft 246 at spaced positions such that the outer circumference of the rear portion of the guide wheel 224 is interposed between the outer circumferences of the front portions of the guide wheels 225. A pair of chain adjusters having the same positioning structure as that of the chain adjusters for the axle 220 are provided at the opposite ends of the guide wheel shaft 246. Thus, the guide wheel shaft 246 is supported through the chain adjusters to the wheel brackets 223. Each of the chain adjusters for the guide wheel shaft 246 includes an eccentric plate 247 having the same structure as that of the eccentric plate 230 mentioned previously. As apparent from Fig. 39, the cover 229 is formed at its lower edge near the eccentric plates 230 and 247 with a plurality of recesses 235 for permitting rotation of the eccentric plates 230 and 247.

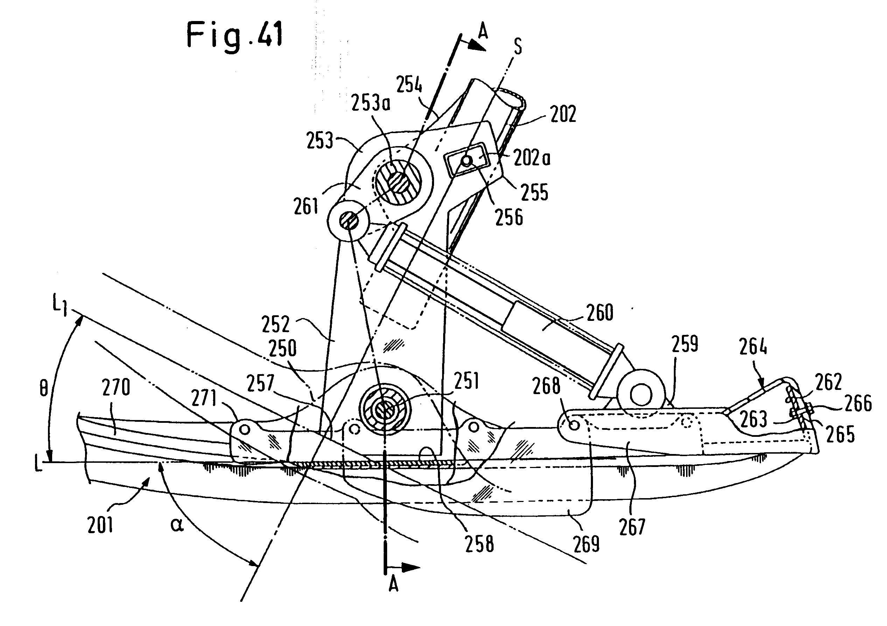

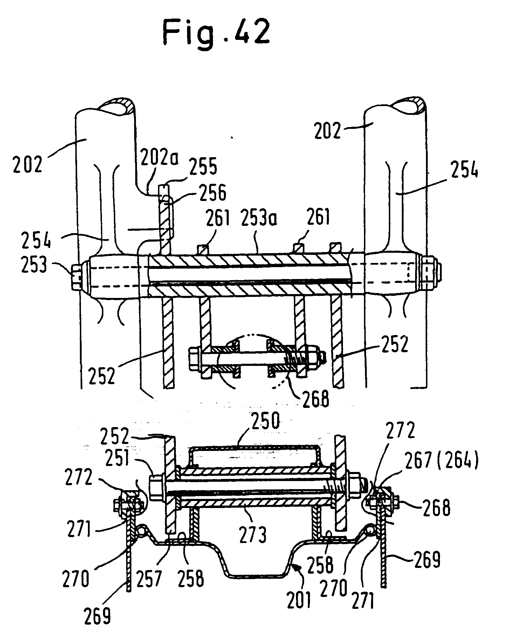

Figures 41 to 43 show the steering ski 201 and its associated parts in the preferred embodiment. Fig. 41 is a partially cut-away enlarged side view of a rear half portion of the steering ski 201 and the associated parts, and Fig. 42 is a cross section taken along the line A-A in Fig. 41. An upwardly projecting supporting member 250 having an inverted U-shape as viewed in cross section is provided on a substantially central portion of the steering ski 201, and a pair of right and left ski brackets 252 are rotatably supported at their lower end portions through a pivotal shaft 251 to the supporting member 250. The right and left front forks 202 are formed with a pair of mounting portions 254 projecting forwardly, and a support shaft 253 extends between the mounting portions 254. The ski brackets 252 are welded at their upper end portions to a collar 253a mounted on the support shaft 253. The right one of the ski brackets 252 extends upwardly to form an engaging portions 255 having an engagement hole 256 to be engaged with a boss 202a projecting inwardly from an inner side surface of the right front fork 202. Thus, the ski brackets 252 are positioned, and they are operated integrally with the front forks 202.

The ski brackets 252 are chamfered at their lower front edges to form a pair of inclined corner portions 257. When a swing angle α of the steering ski 201 (i. e., an angle to be defined by a steering axis S and a line L parallel to a general surface of the steering ski 201) is in a given range less than about 90° during a normal running, the corner portions 257 are maintained in spaced relationship from a pair of stopper surfaces 258 formed by bending the lower ends of the supporting member 250 and attaching the same onto the upper surface of the steering ski 201 (see Fig. 42). On the other hand, when the swing angle α exceeds the given range to reach about 90°, for example, as shown by a phantom line in Fig. 41, the corner portions 257 are brought into abutment against the stopper surfaces 258. That is, when the steering ski 201 is swung at an angle ϑ to be defined by the movement of the line L to a line L₁, resulting in that the swing angle α becomes about 90°, further swinging operation of the steering ski 201 is restricted. With this construction, a stopper mechanism for restricting the swinging operation of the steering ski 201 can be simplified.

A stay 259 is formed behind the supporting member 250 to projecting upwardly from the upper surface of the steering ski 201, and a lower end of a front sub-cushion 260 is pivotably supported to the stay 259. A pair of cushion brackets 261 are welded at their upper ends to the collar 253a around the support shaft 253, and an upper end of the front sub-cushion 260 is pivotably supported to the cushion brackets 261.

A plate 262 is provided at a rear end of the steering ski 201 to project upwardly from the upper surface of the steering ski 201 and be inclined forwardly. A pair of weld nuts 263 are mounted on the plate 262. A rear ski cover 264 is provided to cover the upper surface of the rear end portion of the steering ski 201, and a rear wall 265 of the rear ski cover 264 is inclined forwardly at substantially the same inclined angle as that of the plate 262. The rear wall 265 is mounted on the plate 262, and they are fixed together by engaging a pair of bolts 266 with the weld nuts 263. Opposite side walls 267 of the rear ski cover 264 extend forwardly to the front side of the stay 259, and they are fixed at their front ends by a pair of bolts 268 together with a pair of right and left skid plates 269 to a pair of right and left supporting plates 271 of the steering ski 201. Thus, the rear ski cover 264 is fixed to the steering ski 201 at the four positions.

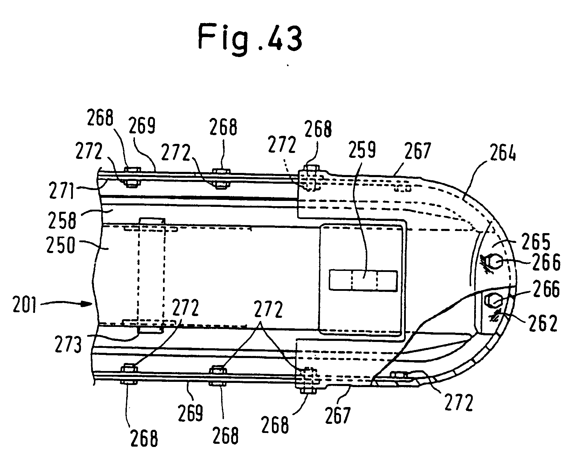

Fig. 43 is a plan view of the rear portion of the steering ski 201. The rear ski cover 264 is formed in a substantially U-shape as viewed in plan in such a manner as to surround the stay 259. As apparent from Figs. 42 and 43, the steering ski 201 is formed at its opposite side edges with a pair of curled portions 270, and the right and left supporting plates 271 are welded to the outside surfaces of the curled portions 270 at the intermediate portion thereof. Each of the supporting plates 271 is provided on its inside surface with a plurality of weld nuts 272 arranged at given intervals in the longitudinal direction. The skid plates 269 are mounted to the supporting plates 271 by selectively engaging a plurality of bolts 268 with the weld nuts 272 in such a manner that a mounting position of the skid plates 269 may be adjusted in the longitudinal direction. Reference numeral 273 denotes a collar mounted around the pivot shaft 251 and welded to the supporting member 250.

As shown in Figs. 37 and 38, a front ski cover 274 is mounted to a front end portion of the steering ski 201. The front ski cover 274 is fixed by a pair of bolts 275 to a bottom surface of the steering ski 201 in such a manner as to surround the front end portion of the steering ski 201. A looped reinforcing pipe 276 is provided at a laterally central position of the front end portion of the steering ski 201 to project upwardly, and the front and side portions of the reinforcing pipe 276 are covered with the front ski cover 274. The front ski cover 274 extends upwardly more than the reinforcing pipe 276.

Referring to Fig. 37, the snow vehicle is provided with a fuel tank 277, a fuel tank cock 278, an oil tank 279, a battery 280, a carburetor 281, an air cleaner 282 and a muffler 283. These parts are entirely covered with the cover 203.

In operation, an output from the engine 207 is transmitted through the drive sprocket 217, the first chain 216a, the intermediate sprocket 214, the intermediate shaft 213, the intermediate sprocket 215, the second chain 216b and the driven sprocket 222 to the drive wheel 221. Thus, the drive wheel 221 is rotated, and the pins 239 of the rim 236 are brought into engagement between the adjacent lateral lugs 241 of the endless belt 226, thereby rotating the endless belt 226 around the drive wheel 221 and the guide wheels 224 and 225. Thus, the vehicle is driven to advance. The guide wheels 224 and 225 are supported to the converged portions 219 continuously extending rearwardly from the expanded portions 218 of the rear fork 208 and accommodated in the inside space of the endless belt 226. That is, it is unnecessary to prepare right and left arms for supporting the guide wheels 224 and 225 independently of the rear fork 208 and connect the rear arms to the laterally outside surfaces of the rear end portions of the rear fork 208 as in the prior art. Accordingly, a laterally projecting amount of the rear fork 208 projecting from the lateral opposite sides of the endless belt 226 can be made minimum and greatly reduced as compared with the prior art. Therefore, the driving device is made slim to thereby improve the anti-stack performance. Furthermore, as the converged portions 219 for supporting the guide wheels 224 and 225 are formed integrally with the rear fork 208 without the rear arms of the prior art, the number of parts and the number of assembling steps may be reduced to thereby reduce cost. Alternatively, the converged portions 219 may be formed independently of the expanded portions 218 of the rear fork 208, and may be bolted to the rear portions of the expanded portions 218. However, a complicated connecting structure between the rear fork 208 and the rear arms in the prior art is not necessary. That is, various parts inclusive of collars for damping or restricting relative swinging motion between the rear fork and the rear arms can be omitted to thereby simplify the connecting structure and reduce the number of parts and the number of assembling steps. Further, as the bumper 228 is mounted to the converged portions 219, it also serves as a reinforcing member for the converged portions 219.

As the carburetor 281 and the air cleaner 282 are covered with the cover 203, an outside air flowing inside the cover 203 is warmed up to near an ordinary temperature by the engine 207 and the muffler 283, thereby suppressing icing of the carburetor 281.

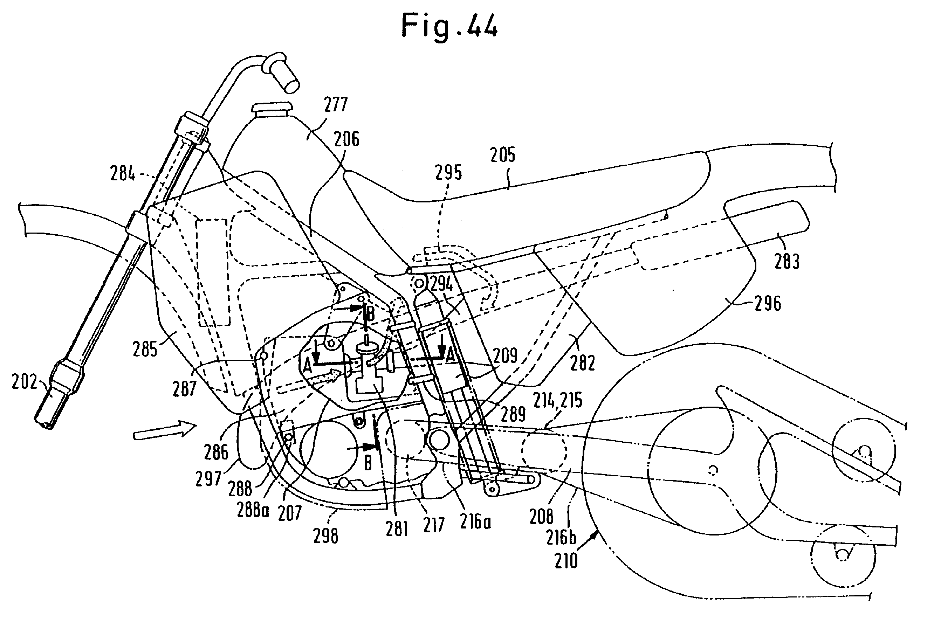

Figs. 44 to 46 show another preferred embodiment of the vehicle body of the snow vehicle for the purpose of preventing the icing of the carburetor. Fig. 44 is a side view of a central portion of the vehicle body of the snow vehicle mounting a water-cooled engine 207. A radiator 284 is provided before the frame 206, and a pair of right and left radiator shrouds 285 are provided on the right and left sides of the radiator 284. Upper portions of the radiator shrouds 285 are located to contact the opposite side surfaces of the fuel tank 277, and lower portions of the radiator shrouds 285 are connected to right and left side covers 286. The side covers 286 are so provided as to cover the outer periphery of the carburetor 281. That is, an upper front portion of each side cover 286 is mounted to overlap the radiator shroud 285, and is connected together by a screw 287. A lower portion of the side cover 286 is fixed through stays 288 by bolts 288a to the side surface of a case of the engine 207. A rear portion of the side cover 286 is fixed to the frame 206 by a pair of bands 289 such as rubber bands. Thus, the side cover 286 is detachably mounted to the vehicle body, so as to permit easy maintenance of the carburetor 281.

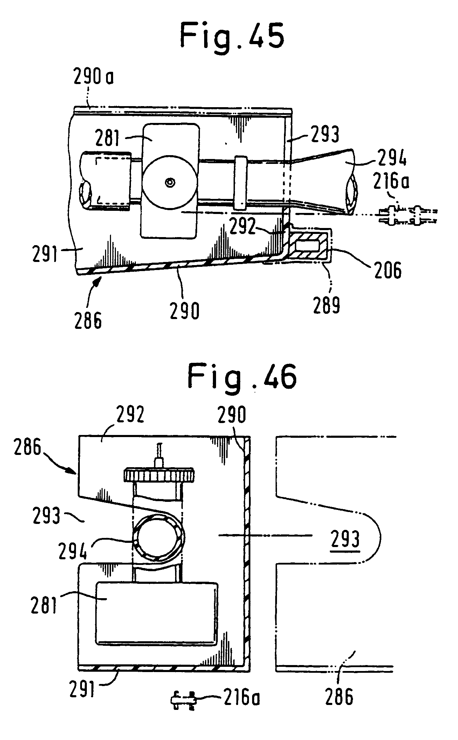

Fig. 45 is an enlarged sectional view of the left side cover 286 taken along the line A-A in Fig. 44, and Fig. 46 is an enlarged sectional view of the left side cover 286 taken along the line B-B in Fig. 44. As apparent from Figs. 45 and 46, the side cover 286 is constructed of an outer side wall 290, a bottom wall 291 and a rear wall 292, thus surrounding the three sides of the carburetor 281. Although the side cover 286 is open on the inner side thereof, an inner side wall 290a substantially parallel to the outer side wall 290 may be provided as shown in Fig. 45 to cover the inner side of the side cover 286. As apparent from Fig.45, the bands 289 provided on the rear wall 292 are wound around the frame 206.

The bottom wall 291 also serves as a partition wall for partitioning the carburetor 281 from the first chain 216a located under the carburetor 281. As apparent from Fig. 46, the rear wall 292 is formed with a recess 293 cut from the inner side of the side cover 286, and a connector hose 294 for connecting the carburetor 281 with the air cleaner 282 is inserted in the recess 293. That is, the left side cover 286 can be mounted from the left side of the engine 207 in such a manner that the recess 293 comes into engagement with the connector hose 294 as shown in Fig. 46. However, in the case that the inner side wall 290a (see Fig. 45) is provided, it is a matter of course that the left side cover 286 cannot be mounted from the left side of the engine 207.

Referring back to Fig. 44, an air duct 295 opening to the front side is provided above the air cleaner 282 and near the bottom of the seat 205. A rear cover 296 covering the rear and side portions of the vehicle body is provided behind the air cleaner 282, and the muffler 283 located on the right side of the vehicle body is covered with the rear cover 296.

The right side cover 286 not shown is provided on the right side of the vehicle body in symmetrical relationship with the left side cover 286. The right side cover 286 is so located as to cover the right side of the carburetor 281 and an exhaust pipe 297 extending from the engine 207 through the right side of the vehicle body to the muffler 283. A lower cover 298 may be provided below each side cover 286 to cover each side of the engine 207. Each side cover 286 may be formed integrally with both the radiator shroud 285 and the lower cover 298 on the same side, or may be formed integrally with the lower cover 298 on the same side. The other construction is substantially the same as the construction shown in Fig. 37, and the same or corresponding parts as those in Fig. 37 are designated by the same reference numerals in Fig. 44.

According to the above-mentioned construction shown in Fig. 44, the icing of the carburetor 281 can be prevented without entirely covering the vehicle body by the cover 203 as in Fig. 37. In operation, a cold outside air flows into the inside area defined between the right and left side covers 286, and it is warmed up to near an ordinary temperature by the engine 207 and the exhaust pipe 297. Then, the warmed air is allowed to pass aside the carburetor 281, and is then induced from the air duct 295 into the air cleaner 282. Further, snow scattered by the first chain 216a is blocked by the bottom wall 291 and the rear wall 292 of each side cover 286, thereby preventing the snow from being attached to the carburetor 281. Furthermore, it is possible to prevent deposition of an emulsified matter to be formed by freezing of a mixture of an oil content and a moisture, which emulsified matter tends to be formed at low temperature less than -3°C. Thus, the icing of the carburetor 281 can be avoided.

The warmed air in the inside area between the side covers 286 is guided by the rear walls 292 of the side covers 286 to reach the air duct 295. Therefore, the warmed air is induced into the air cleaner 282 to thereby suppress entry of snow into the air cleaner 282 and prevent blinding of an element in the air cleaner 282 due to deposition of the snow. This effect may be made more remarkable by extending the side portions of the side covers 286 (as well as the rear walls 292 as required) to the air duct 295.

According to Fig. 37 to 45, as the rear end portions of the rear fork are bent inwardly to extend into the inside space defined by the endless belt, and the guide wheels are supported to the rear end portions, the rear arms for supporting the guide wheels as formed independently of the rear fork can be eliminated. As a result, a laterally projecting amount of the rear fork projecting from the lateral opposite sides of the endless belt can be reduced since no rear arms are connected on the outside surfaces of the rear fork. Accordingly, the driving device can be made slim to thereby improve the anti-stack performance. Further, as the rear fork is integrally formed with the rear arms to eliminate the latter, the number of parts and the number of assembling steps can be reduced to thereby reduce cost.

## Claims

1. A saddle-riding type snow vehicle, comprising
a vehicle body (6; 206),
a rear fork (10; 208) pivotally supported by said vehicle body (6; 206) at the rear end thereof,
a driving wheel (13; 221) rotatably supported by an axle (11; 220) mounted to said rear fork (10; 208),
a pair of oppositely disposed rear arms (15; 218) connected by their front ends to the rear ends of said rear fork (10; 208) and rotatably mounting a guide wheel (16d; 225) at the rear ends thereof, an endless belt (14; 14'; 226) extending between and enclosing said driving wheel (13; 221) and said guide wheel (16d; 226),
a head pipe (4) at the front end of said vehicle body (6; 206),
a front fork (3; 202) pivotally mounted in said head pipe (4), and
a steering ski (1; 201) supported by the lower end of said front fork (3; 202), **characterized** in that said driving wheel (13; 221) has a rim (59; 236), that said endless belt (14; 14'; 226) has a lateral width (W₂) greater than the lateral width (W₁) of said rim (59; 236) of said driving wheel (13; 221), and that said steering ski (1; 201) and said driving wheel (13; 221) are substantially equal in width.

2. The snow vehicle according to claim 1, in which said rear arms (15) are pivotally connected to said rear fork (10).

3. The snow vehicle according to at least one of the claims 1 and 2 in which said rear fork (208) is integrally formed with said rear arms (218).

4. The snow vehicle according to at least one of the claims 1 and 2 including shock cushions (17) extending between said rear fork (10) and each of said rear arms (15).

5. The snow vehicle according to claim 3 in which said rear arms (15) comprise frame structures mounting upper and lower guide wheels (16a, 16b, 16c) for said endless belt (14, 14'), and said shock cushions (17) extend upwardly from said rear fork (10) to said rear arms (15).

6. The snow vehicle according to at least one of the preceding claims in which said endless belt (14, 14') includes:
a plurality of-mutually spaced propelling lugs (74, 74') formed on its exterior surface and extending transversely thereof,
a plurality of core members (75) embedded in a central region of said belt (14, 14') in substantial alignment with said propelling lugs (74, 74'), and
a plurality of transversely extending wall-members (72, 72') formed on the interior surface of said belt (14, 14') in substantial overlying relation to said propelling lugs (74, 74').

7. The snow vehicle according to claim 6 including notches (73) formed in each of said wall-members (72, 72') to facilitate lateral flexure of said belt (14, 14').

8. The snow vehicle according to claim 7 in which said notches (73) are located in said wall-members (72, 72') at or exteriorly of the lateral ends of said core members (75).

9. The snow vehicle according to at least one of the claims 8 to 10 in which said propelling lugs (74, 74'), said core members (75) and said wall-members (72, 72') are disposed in substantial mutually aligned relation.

10. The snow vehicle according to at least one of the preceding claims including a plurality of guide clips (81) attached to the interior surface of said belt (14, 14'), said clips (81) having oppositely spaced, inwardly extending guide arms (82), and a downwardly extending slide rail (85) fixed with respect to said rear arms (15) for slidingly engaging said clips (81).

11. The snow vehicle according to claim 10 including a plurality of through-holes (80) forming openings in said belt (14, 14') intermediate said wall-members (72, 72') adjacent said core members (75), and means (83) for attaching said clips (81) to said core members (75).

12. The snow vehicle according to at least one of the claims 6 to 11 including means (59, 60) on said driving wheel (13) for engaging said wall-members (72, 72')) for driving said belt (14, 14').

13. The snow vehicle according to claim 12 in which said belt driving means (59, 60) comprises:
an annular rim (59) on said driving wheel (13), and a plurality of criving pins (60) extending in laterally opposite directions from said rim (59) , said pins (60) being disposed in circumferentially spaced relation about the periphery of said rim (59).

14. The snow vehicle according to claim 13 in which said pins (60) are generally cylindrically formed and are fixedly secured to said rim (59).

15. The snow vehicle according to at least one of the preceding claims in which said rear fork (10; 208) contains oppositely spaced, rearwardly extending extensions (10d; 209) and at least rearwardly extending portions of said rear arms (15; 223) are disposed laterally interiorly of said rear fork extensions (10d ; 209).

16. The snow vehicle according to at least one of the claims 3 to 15 in which rear portions (at 219) of said arm portions (219) for supporting said guide wheel (225) are bent inwardly to be accomodated in an inside space of said endless belt (226).

17. The snow vehicle according to at least one of the preceding claims including a pair of oppositely extending footrests (9) on said vehicle body (6), the lateral width of said rear fork (10) extending not substantially outwardly of the lateral outer ends of said footrests (9).

18. The snow vehicle according to claim is 15 which at least said rearwardly extending portions of said rear arms (15) are disposed laterally within and are enclosed by said belt (14, 14').

19. The snow vehicle according to at least one of the claims 4 to 18 including shock cushions (17) extending between said rear fork (10) and said rear arms (15), said shock cushions (17) being disposed laterally within and enclosed by said belt (14, 14').

20. The snow vehicle according to at least one of the preceding claims including a braking device (57, 65, 66; 235) operatively engageable with said driving wheel (13; 221), said braking device (57, 65, 66; 221) being mounted within said rear fork (10; 208) and enclosed by said belt (14; 14'; 226).

21. The snow vehicle according to claim 20 in which said braking device (57, 65, 66) comprises a brake disc (57) on said driving wheel (13), a caliper bracket (65) secured with respect to said rear arms (15), and a brake caliper (66) mounted on said bracket (65) and operatively engageable with said brake disc (13).

22. The snow vehicle according to at least one of the preceding claims in which said belt (14, 14') has substantially the same lateral dimensions as the lateral space between said rear arms (15).

23. The snow vehicle according to at least one of the preceding claims including an engine (7) on said vehicle body (6), a driven member (12) fixed to said driving wheel (13) on an outer side thereof, means (8, 45, 46, 47, 48) for operatively connecting said driven member (12) to said engine (7) and the rear arm (15) disposed adjacent said driven member (12) being positioned between said driving wheel (13) and said driven member (12).

24. The snow vehicle according to at least one of the preceding claims in which said vehicle body (6; 206) is defined by frame members and in which the vertical position of said axle (11; 220) supporting said driving wheel (13; 221) is higher than the lowermost of said frame members.

25. The snow vehicle according to at least one of the preceding claims in which said axle (11; 220) supporting said driving wheel (13; 221) and a rear axle (71; 246) mounting said guide wheel (16d; 225) are configured to incur substantially equal axle weight.

26. The snow vehicle according to at least one of the preceding claims including a bracket (20; 252) securing said steering ski (1; 201) to said front fork (3; 202), a pivot axle (30; 251) connecting said ski (1; 201) to said front fork (3; 202), said pivot axle (30; 251) having an axis intersecting the axis (S) of said front fork (3, 202).

27. The snow vehicle according to claim 26 including means (32) forming a cushion (32) between said bracket (20) and said steering ski (1).

28. The snow vehicle according to claim 27 in which said cushion (32) is formed of a body of elastic material.

29. The snow vehicle according to at least one of the preceding claims including a shock cushion (26, 260) extending between and mounting said steering ski (1; 201) at one end of said front fork (3; 202) at the other end thereof.

30. The snow vehicle according to at least one of the preceding claims including longitudinally extending edge members (37) disposed on opposite sides of said steering ski (1) and means (35, 36, 38, 39, 84) for adjustably mounting said edge members (37) with respect to said ski (1).

31. The snow vehicle according to at least one of the preceding claims including means forming a track belt cover (90, 90', 90''; 229) mounted to said rear arms (15; 223) and extending across and covering said belt (14; 14'; 226).

32. The snow vehicle according to claim 29 in which said track belt cover (90'; 90'') comprises a front cover component (94) secured to said rear fork (10) and a rear cover component (95) in overlapping relation with respect to said front cover component (94) and secured to said rear arms (15).

33. The snow vehicle according to at least one of the claims 31 and 32 including means (100) forming discharge openings (100) in said cover (90'') for discharging snow from the interior thereof.

34. The snow vehicle according to at least one of the claims 32 and 33 including means (100) forming discharge openings (100) in said front cover component (94) for discharging snow from the interior of said cover (90'').

35. The snow vehicle according to at least one of the preceding claims including grab rail means (101, 101', 101'', 102, 103, 104, 105) secured to said rear arms (15).

36. The snow vehicle according to claim 35 in which said grab rail means (101, 101', 101'', 102, 103, 104, 105) comprises individual grab rails (101, 101', 101'') secured to each of said rear arms (15).

37. The snow vehicle according to at least one of the claims 35 and 36 in which said grab rail means (101, 101', 101'', 102, 103, 104, 105) comprises a grab rail (101') in spaced overlying relation to said cover (90) and having each of its ends connected to one of said rear arms (15).

38. The snow vehicle according to at least one of the claims 35 to 37 in which said grab rail means (101, 101', 101'', 102, 103, 104, 105) comprises a grab rail (101'') disposed in generally spaced horizontal relation with respect to the rear ends of said rear arms (15) and having each of its ends connected to one of said rear arms (15).

## Patentansprüche

1. Schneefahrzeug mit Sattel zum Aufsitzen, umfassend
- einen Fahrzeugrumpf (6; 206),
- eine schwenkbar durch den Fahrzeugrumpf (6; 206) an dem hinteren Ende desselben getragene hintere Gabel (10; 208),
- ein von einer an der hinteren Gabel (10;208) angebrachten Achse (11; 220) drehbar getragenes Antriebsrad (13; 221),
- ein Paar von gegenüberliegend angeordneten hinteren Armen (15; 218), welche durch ihre vorderen Enden mit den hinteren Enden der hinteren Gabel (10; 208) verbunden sind und an deren hinteren Enden ein Führungsrad (16d; 225) drehbar angebracht ist,
- ein Endlosband (14; 14'; 226), welches sich zwischen dem Antriebsrad (13; 221) und dem Führungsrad (16d; 226) erstreckt und diese umschließt,
- ein Kopfrohr (4) am vorderen Ende des Fahrzeugrumpfs (6; 206),
- eine vordere Gabel (3; 202) welche in dem Kopfrohr (4) schwenkbar angebracht ist, und
- einen Lenkski (1; 201), welcher vom unteren Ende der vorderen Gabel (3; 202) getragen ist,
**dadurch gekennzeichnet,**
daß das Antriebsrad (13; 221) eine Felge (59; 236) aufweist, daß das Endlosband (14; 14'; 226) eine laterale Breite (W₂) größer als die laterale Breite (W₁) der Felge (59; 236) des Antriebsrads (13; 221) aufweist, und
daß der Lenkski (1; 201) und das Antriebsrad (13; 221) im wesentlichen die gleiche Breite aufweisen.

2. Schneefahrzeug nach Anspruch 1, worin die hinteren Arme (15) schwenkbar mit der hinteren Gabel (10) verbunden sind.

3. Schneefahrzeug nach wenigstens einem der Ansprüche 1 und 2, worin die hintere Gabel (208) integral mit den hinteren Armen (218) ausgebildet ist.

4. Schneefahrzeug nach wenigstens einem der Ansprüche 1 und 2, umfassend Stoßdämpfer (17), welche sich zwischen der hinteren Gabel (10) und jedem der hinteren Arme (15) erstrecken.

5. Schneefahrzeug nach Anspruch 3, worin die hinteren Arme (15) Rahmenstrukturen umfassen, an welchen obere und untere Führungsräder (16a, 16b, 16c) für das Endlosband (14, 14') angebracht sind, und die Stoßdämpfer (17) sich von der hinteren Gabel (10) zu den hinteren Armen (15) nach oben erstrecken.

6. Schneefahrzeug nach wenigstens einem der vorhergehenden Ansprüche, worin das Endlosband (14, 14') umfaßt:
- eine Mehrzahl von voneinander beabstandeten Antriebsansätzen (74, 74'), welche an seiner äußeren Oberfläche ausgebildet sind und sich quer dazu erstrecken,
- eine Mehrzahl von Kernelementen (75), welche in einen zentralen Bereich des Bands (14, 14') im wesentlichen mit den Antriebsansätzen (74, 74') ausgerichtet eingebettet sind, und
- eine Mehrzahl von sich quer erstreckenden Wandelementen (72, 72'), welche an der inneren Oberfläche des Bands (14, 14') im wesentlichen in überlagernder Beziehung mit den Antriebsansätzen (74, 74') ausgebildet sind.

7. Schneefahrzeug nach Anspruch 6, umfassend Einkerbungen (73), welche in jedem der Wandelemente (72, 72') gebildet sind, um eine seitliche Verbiegung des Bands (14, 14') zu ermöglichen.

8. Schneefahrzeug nach Anspruch 7, worin die Einkerbungen (73) in den Wandelementen (72, 72') an den oder außerhalb der seitlichen Enden der Kernelemente (75) angeordnet sind.

9. Schneefahrzeug nach wenigstens einem der Ansprüche 8 bis 10, worin die Antriebsansätze (74, 74'), die Kernelemente (75) und die Wandelemente (72, 72') im wesentlichen in gegenseitig ausgerichteter Beziehung angeordnet sind.

10. Schneefahrzeug nach wenigstens einem der vorhergehenden Ansprüche, umfassend eine Mehrzahl von Führungsklammern (81), welche an der inneren Oberfläche des Bands (14, 14') angebracht sind, wobei die Klammern (81) voneinander beabstandete, sich nach innen erstreckende Führungsarme (82) aufweisen, sowie eine sich nach unten erstreckende Führungsschiene (85), welche bezüglich der hinteren Arme (15) zum verschiebbaren Eingreifen mit den Klammern (81) festgelegt ist.

11. Schneefahrzeug nach Anspruch 10, umfassend eine Mehrzahl von durchgehenden Löchern (80), welche Öffnungen in dem Band (14, 14') zwischen den Wandelementen (72, 72') angrenzend an die Kernelemente (75) bilden, sowie Mittel (83) zum Anbringen der Klammern (81) an den Kernelementen (75).

12. Schneefahrzeug nach wenigstens einem der Ansprüche 6 bis 11, umfassend Mittel (59, 60) an dem Antriebsrad (13) zum Angreifen an den Elementen (72, 72') zum Antreiben des Bands (14, 14').

13. Schneefahrzeug nach Anspruch 12, worin das Bandantriebsmittel (59, 60) umfaßt:
eine ringförmige Felge (59) auf dem Antriebsrad (13) und eine Mehrzahl von Antriebsstiften (60), welche sich in entgegengesetzten seitlichen Richtungen von der Felge (59) erstrecken, wobei die Stifte (60) in in Umfangsrichtung beabstandeter Beziehung um den Umfang der Felge (59) angeordnet sind.

14. Schneefahrzeug nach Anspruch 13, worin die Stifte (60) im wesentlichen zylindrisch ausgebildet sind und fest an der Felge (59) angebracht sind.

15. Schneefahrzeug nach wenigstens einem der vorhergehenden Ansprüche, worin die hintere Gabel (10; 208) voneinander beabstandete, sich nach hinten erstreckende Verlängerungen (10d; 209) enthält, und worin wenigstens sich nach hinten erstreckende Abschnitte der hinteren Arme (15; 223) seitlich innerhalb der Verlängerungen (10d; 209) der hinteren Gabel angeordnet sind.

16. Schneefahrzeug nach wenigstens einem der Ansprüche 3 bis 15, worin hintere Abschnitte (bei 219) der Armabschnitte (219) zum Tragen des Führungsrads (225) nach innen gebogen sind, um in einem Innenraum des Endlosbands (226) aufgenommen zu sein.

17. Schneefahrzeug nach wenigstens einem der vorhergehenden Ansprüche, umfassend ein Paar von sich entgegengesetzt erstreckenden Fußrasten (9) am Fahrzeugrumpf (6), wobei die seitliche Breite der hinteren Gabel (10) sich nicht wesentlich außerhalb der seitlichen äußeren Enden der Fußrasten (9) erstreckt.

18. Schneefahrzeug nach Anspruch 15, worin wenigstens die sich nach hinten erstreckenden Abschnitte der hinteren Arme (15) seitlich innerhalb des Bands (14, 14') angeordnet sind und von diesem umschlossen sind.

19. Schneefahrzeug nach wenigstens einem der Ansprüche 4 bis 18, umfassend Stoßdämpfer (17), welche sich zwischen der hinteren Gabel (10) und den hinteren Armen (15) erstrecken, wobei die Stoßdämpfer (17) seitlich innerhalb des Bands (14, 14') angeordnet und von diesem umschlossen sind.

20. Schneefahrzeug nach wenigstens einem der vorhergehenden Ansprüche, umfassend eine Bremseinrichtung (57, 65, 66; 235) welche betriebsmäßig mit dem Antriebsrad (13; 221) in Eingriff bringbar ist, wobei die Bremseinrichtung (57, 65, 66; 221) innerhalb der hinteren Gabel (10; 208) angebracht ist und von dem Band (14; 14'; 226) umschlossen ist.

21. Schneefahrzeug nach Anspruch 20, worin die Bremseinrichtung (57, 65, 66) eine Bremsscheibe (57) an dem Antriebsrad (13) umfaßt, eine Sattelklammer (65), welche bezüglich der hinteren Arme (15) festgelegt ist, und einen Bremssattel (66), welcher an der Klammer (65) angebracht ist, und betriebsmäßig mit der Bremsscheibe (13) in Eingriff bringbar ist.

22. Schneefahrzeug nach wenigstens einem der vorhergehenden Ansprüche, worin das Band (14, 14') im wesentlichen die gleichen seitlichen Abmessungen wie der seitliche Raum zwischen den hinteren Armen (15) aufweist.

23. Schneefahrzeug nach wenigstens nach einem der vorhergehenden Ansprüche, umfassend einen Motor (7) am Fahrzeugrumpf (6), ein angetriebenes Element (12), welches an dem Antriebsrad (13) an einer Außenseite desselben befestigt ist, Mittel (8, 45, 46, 47, 48) zum betriebsmäßigen Verbinden des angetriebenen Elements (12) mit dem Motor (7), und wobei der hintere Arm (15), welcher angrenzend an das angetriebene Element (12) angeordnet ist, zwischen dem Antriebsrad (13) und dem angetriebenen Element (12) angeordnet ist.

24. Schneefahrzeug nach wenigstens einem der vorhergehenden Ansprüche, worin der Fahrzeugrumpf (6; 206) durch Rahmenelemente festgelegt ist, und worin die vertikale Position der Achse (11; 220), welche das Antriebsrad (13; 221) trägt, höher ist als das unterste der Rahmenelemente.

25. Schneefahrzeug nach wenigstens einem der vorhergehenden Ansprüche, worin die Achse (11; 220), welche das Antriebsrad (13; 221) trägt, und eine hintere Achse (71; 246), an welcher das Führungsrad (16d; 225) angebracht ist, so ausgelegt sind, daß sie im wesentlichen das gleiche Achsengewicht tragen.

26. Schneefahrzeug nach wenigstens einem der vorhergehenden Ansprüche, umfassend eine Klammer (20; 252), welche den Lenkski (1; 201) an der vorderen Gabel (3; 202) festlegt, eine Schwenkachse (30; 251), welche den Ski (1; 201) mit der vorderen Gabel (3; 202) verbindet, wobei die Schwenkachse (30; 251) eine Achse aufweist, welche die Achse (S) der vorderen Gabel (3; 202) schneidet.

27. Schneefahrzeug nach Anspruch 26, umfassend Mittel (32), welche ein Dämpfungselement (32) zwischen der Klammer (20) und dem Lenkski (1) bilden.

28. Schneefahrzeug nach Anspruch 27, worin das Dämpfungselement (32) aus einem Körper aus elastischem Material gebildet ist.

29. Schneefahrzeug nach wenigstens einem der vorhergehenden Ansprüche, umfassend einen Stoßdämpfer (26; 260), welcher sich zwischen dem Lenkski (1; 201) und der vorderen Gabel (3; 202) erstreckt und mit einem Ende am Lenkski (1; 201) und mit seinem anderen Ende an der vorderen Gabel (3; 202) angebracht ist.

30. Schneefahrzeug nach wenigstens einem der vorhergehenden Ansprüche, umfassend sich in Längsrichtung erstreckende Kantenelemente (37), welche an entgegengesetzten Seiten des Lenkskis (1) angeordnet sind, sowie Mittel (35, 36, 38, 39, 84) zum einstellbaren Anbringen der Kantenelemente (37) bezüglich des Skis (1).

31. Schneefahrzeug nach wenigstens einem der vorhergehenden Ansprüche, umfassend Mittel, welche eine Spurbandabdeckung (90, 90', 90''; 292) bilden, welche an den hinteren Armen (15; 223) angebracht ist und sich über das Band (14; 14'; 226) erstreckt und dieses abdeckt.

32. Schneefahrzeug nach Anspruch 29, worin die Spurbandabdeckung (90'; 90'') eine vordere Abdeckungskomponente (94) umfaßt, welche an der hinteren Gabel (10) festgelegt ist, sowie eine hintere Abdeckungskomponente (95), welche in überlappender Beziehung bezüglich der vorderen Abdeckungskomponente (94) angeordnet ist und an den hinteren Armen (15) festgelegt ist.

33. Schneefahrzeug nach wenigstens einem der Ansprüche 31 und 32, umfassend Mittel (100), welche Auslaßöffnungen (100) in der Abdeckung (90'') zum Auslassen von Schnee aus dem Inneren derselben umfassen.

34. Schneefahrzeug nach wenigstens einem der Ansprüche 32 und 33, umfassend Mittel (100), welche Auslaßöffnungen (100) in der vorderen Abdeckungskomponente (94) zum Auslassen von Schnee aus dem Inneren der Abdeckung (90'') bilden.

35. Schneefahrzeug nach wenigstens einem der vorhergehenden Ansprüche, umfassend Greifschienenmittel (101, 101', 101'', 102, 103, 104, 105), welche an den hinteren Armen (15) befestigt sind.

36. Schneefahrzeug nach Anspruch 35, worin das Greifschienenmittel (101, 101', 101'', 102, 103, 104, 105) individuelle Greifschienen (101, 101', 101'') umfaßt, welche an jedem der hinteren Arme (15) befestigt sind.

37. Schneefahrzeug nach wenigstens einem der Ansprüche 35 und 36, worin das Greifschienenmittel (101, 101', 101'', 102, 103, 104, 105) eine Greifschiene (101') umfaßt, welche in beabstandeter und übereinanderliegender Beziehung bezüglich der Abdeckung (90) angeordnet ist, und deren Enden jeweils mit einem der hinteren Arme (15) verbunden sind.

38. Schneefahrzeug nach wenigstens einem der Ansprüche 35 bis 37, worin das Greifschienenmittel (101, 101', 101'', 102, 103, 104, 105) eine Greifschiene (101'') umfaßt, welche in im allgemeinen horizontal beabstandeter Beziehung bezüglich der hinteren Enden der hinteren Arme (15) angeordnet ist, und wobei jedes ihrer Enden mit einem der hinteren Arme (15) verbunden ist.

## Revendications

1. Véhicule pour la neige du type à enfourcher sur une selle comprenant
un corps de véhicule (6 ; 206)
une fourche arrière (10 ; 208) supportée, de façon pivotante, par ledit corps de véhicule (6, 206) au niveau de son extrémité arrière,
une roue motrice (13, 221) supportée, de façon rotative, par un essieu (11 ; 220) monté sur ladite fourche arrière (10 ; 208),
une paire de bras arrière (15;218) disposés face à face, connectés par leurs extrémités avant aux extrémités arrière de ladite fourche arrière (10 ; 208) et enfourchant de façon rotative, une roue de guidage (16d ; 225) à ses extrémités arrière,
une bande sans fin (14 ; 14' ; 226) s'étendant entre et enfermant ladite roue motrice (13 ; 221) et ladite roue de guidage (16d ; 226),
un tube de tête (4) à l'extrémité avant dudit corps de véhicule (6, 206),
une fourche avant (3, 202) montée de façon pivotante dans ledit tube de tête (4), et
un ski de direction (1 ; 201) supporté par l'extrémité inférieure de ladite fourche avant (3 ; 202), caracterisé en ce que ladite roue motrice (13, 221) comporte une jante (59 ; 236), que ladite bande sans fin (14, 14'; 226) présente une largeur latérale (W₂) plus grande que la largeur latérale (W₁) de ladite jante (59 ; 236) de ladite roue motrice (13; 221) , et en ce que ledit ski de direction (1;201) et ladite roue motrice (13;221) sont de largeur sensiblement égale.

2. Véhicule pour la neige selon la revendication 1, dans lequel lesdits bras arrière (15) sont reliés de façon pivotante à ladite fourche arrière (10).

3. Véhicule pour la neige selon l'une au moins des revendications 1 et 2 dans lequel ladite fourche arrière (208) est formée solidairement avec lesdits bras arrière (218).

4. Véhicule pour la neige selon l'une au moins des revendications 1 et 2 incluant des amortisseurs de choc (17) s'étendant entre ladite fourche arrière (10) et chacun desdits bras arrière (15).

5. Véhicule pour la neige selon la revendication 3 dans lequel lesdits bras arrière (15) comprennent des ossatures assemblant des roues de guidage supérieures et inférieures (16a, 16b, 16c) pour ladite bande sans fin (14, 14') , et lesdits amortisseurs de choc (17) s'étendent vers le haut depuis ladite fourche arrière (10) vers lesdits bras arrière (15).

6. Véhicule pour la neige selon l'une au moins des revendications précédentes dans lequel ladite bande sans fin (14, 14') inclut :
une pluralité de nervures de propulsion espacées (74, 74') formées sur sa surface extérieure et s'étendant transversalement à celle-ci ;
une pluralité d'éléments formant noyaux (75) noyés dans une zone centrale de ladite bande (14,14') sensiblement en alignement avec lesdites nervures de propulsion (74,74') et
une pluralité d'éléments de paroi (72,72') s'étendant transversalement formés sur la surface intérieure de ladite bande (14, 14') dans une relation sensiblement de superposition auxdites nervures de propulsion (74, 74').

7. Véhicule pour la neige selon la revendication 6 incluant des encoches (73) formées dans chacun des éléments de paroi (72, 72') pour faciliter la flexion latérale de ladite bande (14, 14').

8. Véhicule pour la neige selon la revendication 7 dans lequel lesdites encoches (73) sont situées dans lesdits éléments de paroi (72, 72') au niveau des ou extérieurement aux extrémités latérales desdits éléments formant noyaux (75).

9. Véhicule pour la neige selon l'une au moins des revendication 8 à 10 dans lequel lesdites nervures de propulsion (74,74'), lesdits éléments formant noyaux (75) et lesdits éléments de paroi (72,72') sont disposés sensiblement en relation d'alignement mutuel.

10. Véhicule pour la neige selon l'une au moins des revendications précédentes incluant une pluralité de pinces de guidage (81) fixées à la surface intérieure de ladite bande (14, 14') , lesdites pinces (81) présentant des bras de guidage (82) s'étendant vers l'intérieur, disposés face à face, et un rail de coulissement (85) s'étendant vers le bas fixé par rapport auxdits bras arrière (15) pour s'engager de façon coulissante dans lesdites pinces (81).

11. Véhicule pour la neige selon la revendication 10 incluant une pluralité de trous traversants(80) formant des ouvertures dans ladite bande (14, 14') entre lesdits éléments de paroi (72,72') adjacents auxdits éléments formant noyaux (75), et des moyens (83) pour fixer lesdites pinces (81) auxdits éléments formant noyaux (75).

12. Véhicule pour la neige selon l'une au moins des revendications 6 à 11 incluant un moyen (59, 60) sur ladite roue motrice (13) pour engager lesdits éléments de paroi (72, 72') pour entraîner ladite bande (14, 14').

13. Véhicule pour la neige selon la revendication 12 dans lequel ledit moyen d'entraînement (59,60) de la bande comprend :
une jante annulaire (59) sur ladite roue motrice (13), et une pluralité de broches d'entraînement (60) s'étendant dans des directions latéralement opposées à partir de ladite jante (59), lesdites broches (60) étant disposées en relation d'espacement sur la circonférence à la périphérie de ladite jante (59).

14. Véhicule pour la neige selon la revendication 13 dans lequel lesdites broches (60) sont formées de façon généralement cylindrique et sont fixées solidement à ladite jante (59).

15. Véhicule pour la neige selon l'une au moins des revendications précédentes dans lequel ladite fourche arrière (10 ; 208) contient des extensions (10d;209) s'étendant vers l'arrière, espacés de façon opposée, et au moins des parties s'étendant vers l'arrière desdits bras arrière (15;223) sont disposées l'atéralement à l'intérieur desdites extensions (10d; 209) de la fourche arrière.

16. Véhicule pour la neige selon l'une au moins des revendications 3 à 15 dans lequel des parties arrière (en 219) desdites parties de bras (219) pour supporter ladite roue de guidage (225) sont repliés vers l'intérieur pour être reçues dans un espace intérieur de ladite bande sans fin (226).

17. Véhicule pour la neige selon l'une au moins des revendications précédentes incluant une paire de repose-pieds (9) s'étendant de façon opposée sur ledit corps de véhicule (6), la largeur latérale de ladite fourche arrière (10) ne s'étendant pas sensiblement vers l'extérieur des extrémités latérales extérieures desdits repose-pieds (9)

18. Véhicule pour la neige selon la revendication 15 dans lequel au moins lesdites parties s'étendant vers l'arrière desdits bras arrière (15) sont disposés latéralement à l'intérieur et sont enfermées par ladite bande (14, 14').

19. Véhicule pour la neige selon l'une au moins des revendications 4 à 8 incluant des amortisseurs de choc (17) s'étendant entre ladite fourche arrière (10) et lesdits bras arrière (15) , lesdits amortisseurs de choc (17) étant disposés latéralement à l'intérieur et entourés par ladite bande (14, 14').

20. Véhicule pour la neige selon l'une au moins des revendications précédentes incluant un dispositif de freinage (57, 65, 66; 235) qui peut s'engager de façon opérationnelle avec ladite roue motrice (13; 221) , ledit dispositif de freinage (57,65, 66 ; 221) étant monté à l'intérieur de ladite fourche arrière (10 ; 208) et entouré par ladite bande (14, 14'; 226).

21. Véhicule pour la neige selon la revendication 20 dans lequel ledit dispositif de freinage (57, 65, 66) comprend un disque de freinage (57) sur ladite roue motrice (13) , un support d'étrier (65) fixée par rapport auxdits bras arrière (15), et un étrier de frein (66) monté sur ledit support (65) et pouvant s'engager de façon opérationnelle avec ledit disque de frein (13).

22. Véhicule pour la neige selon l'une au moins des revendications précédentes dans lequel ladite bande (14, 14') a pratiquement les mêmes dimensions latérales que l'espace latéral situé entre lesdits bras arrière (15).

23. Véhicule pour la neige selon l'une au moins des revendications précédentes incluant un moteur (7) sur ledit corps de véhicule (6), un élément mené (12) fixé à ladite roue motrice (13) sur un de ses côtés extérieurs, un moyen (8, 45, 46, 47, 48) pour relier de façon opérationnelle ledit élément mené (12) audit moteur (17) et le bras arrière (15) disposé à côté dudit élément mené (12) étant positionné entre ladite roue motrice (13) et ledit élément mené (12).

24. Véhicule pour la neige selon l'une au moins des revendications précédentes dans lequel ledit corps de véhicule (6; 206) est défini par des éléments de cadre et dans lequel la position verticale dudit essieu (11; 220) supportant ladite roue motrice (13;221) est plus élevée que le plus bas desdits éléments de cadre.

25. Véhicule pour la neige selon l'une au moins des revendications précédentes dans lequel ledit axe (11; 220) supportant ladite roue motrice (13; 221) et un essieu de montage (71;246) portant ladite roue de guidage (16d; 225) sont configurés pour avoir un poids d'essieu sensiblement égal.

26. Véhicule pour la neige selon l'une au moins des revendications précédentes incluant un support (20;252) fixant ledit ski de direction (1; 201) à ladite fourche avant (3; 202) , un essieu de pivot (30; 251) reliant ledit ski (1; 201) à ladite fourche avant (3; 202), ledit essieu de pivot (30; 251) ayant un axe coupant l'axe (S) de ladite fourche avant (3; 202).

27. Véhicule pour la neige selon la revendication 26 incluant un moyen (32) formant un coussin (32) entre le support (20) et ski de direction (1).

28. Véhicule pour la neige selon la revendication 27 dans lequel ledit coussin (32) est formé d'un corps en matériau élastique.

29. Véhicule pour la neige selon l'une au moins des revendications précédentes incluant un amortisseur de choc (26, 260) s'étendant entre et portant ledit ski de direction (1;201) à une extrémité de ladite fourche avant (3; 202) à son autre extrémité.

30. Véhicule pour la neige selon l'une au moins des revendications précédentes incluant des éléments de bord (37) s'étendant longitudinalement disposés sur les côtés opposés du ski de direction (1) et des moyens (35, 36, 38, 39 , 84) pour monter de façon réglable lesdits éléments de bord (37) par rapport audit ski (1).

31. Véhicule pour la neige selon l'une au moins des revendications précédentes incluant un moyen formant une couverture de bande de piste (90, 90', 90''; 229) monté sur lesdits bras arrière (15; 223) et s'étendant en travers de ladite bande (14, 14'; 226) et la recouvrant.

32. Véhicule pour la neige selon la revendication 29 dans lequel ladite couverture de bande de piste (90' ,90'') comprend un composant de couverture avant (94) fixé à ladite fourche arrière (10) et un composant de couverture arrière (95) en relation de superposition par rapport audit composant de couverture avant (94) et fixé auxdits bras arrière (15).

33. Véhicule pour la neige selon l'une au moins des revendications 31 et 32 incluant un moyen (100) formant des ouvertures d'évacuation (100) dans ladite couverture (90'') pour évacuer la neige depuis l'intérieur.

34. Véhicule pour la neige selon l'une au moins des revendications 32 et 33 incluant un moyen (100) formant des ouvertures d'évacuation (100) dans ledit composant de couverture avant (94) pour évacuer la neige de l'intérieur de ladite couverture (90'').

35. Véhicule pour la neige selon l'une au moins des revendications précédentes incluant un moyen formant main courante (101, 101', 101'', 102, 103, 104, 105) fixé auxdits bras arrière (15).

36. Véhicule pour la neige selon la revendication 35 dans lequel ledit moyen formant main courante (101, 101', 101'', 102, 103, 104, 105) comprend des mains courantes individuelles (101, 101', 101'') fixées à chacun desdits bras arrière (15).

37. Véhicule pour la neige selon l'une au moins des revendications 35 à 36 dans lequel ledit moyen formant main courante (101, 101', 101'', 102, 103, 104, 105) comprend une main courante (101') en relation de superposition espacée avec ladite couverture (90) et ayant chacune de ses extrémités raccordée à l'un desdits bras arrière (15).

38. Véhicule pour la neige selon l'une au moins des revendications 35 à 37 dans lequel ledit moyen formant main courante (101, 101', 101'', 102, 103, 104, 105) comprend une main courant (101'') disposée dans une relation d'espacement généralement horizontale par rapport aux extrémités arrière desdits bras arrière (15) et ayant chacune de ses extrémités reliée à l'un desdits bras arrière (15).
